# EUROPÄISCHE PATENTSCHRIFT

(11) **EP 3 775 589 B1**
(45) Veröffentlichungstag und Bekanntmachung des Hinweises auf die Patenterteilung: **10.05.2023**
(21) Anmeldenummer: 19720359.9
(22) Anmeldetag: 08.04.2019
(51) Int. Cl.: F16C 33/41, F16C 33/38

(54) **KUGELLAGER-KÄFIG UND KUGELLAGER**
BALL BEARING CAGE AND BALL BEARING
CAGE DE ROULEMENT À BILLES ET ROULEMENT À BILLES

(30) Priorität: 10.04.2018 DE 102018108523
(43) Veröffentlichungstag der Anmeldung: 17.02.2021
(73) Patentinhaber: Gebrüder Reinfurt GmbH&Co. KG, 97222 Rimpar (DE)
(72) Erfinder: ARMANI, Daniel, 97294 Burggrumbach (DE); NIEDERMEIER, Herbert, 97490 Poppenhausen (DE); PÖSSE, Olaf, 71083 Herrenberg (DE); SCHURZ, Holger, 97299 Zell (DE)
(74) Vertreter: Heyerhoff Geiger & Partner Patentanwälte PartGmbB
(86) Internationale Anmeldenummer: PCT/DE2019/100323
(87) Internationale Veröffentlichungsnummer: WO 2019/196988

(56) Entgegenhaltungen:
- CH-A- 35 764
- DE-A1-102015 214 850
- DE-B4-102014 008 763
- DE-U1- 29 602 481
- JP-A- 2000 205 268
- US-A- 3 506 316
- US-A- 5 941 704
- US-A1- 2012 087 612

## Beschreibung

Die Erfindung betrifft ein Kugellager mit einem Kugellager-Käfig.

Wälzlager sind Lager, bei denen zwischen einem sogenannten Innenring und einem Außenring rollende Körper, d. h. Wälzkörper, einen Reibungswiderstand verringern. Sie dienen als Fixierung von Achsen und Wellen, wobei sie, je nach Bauform, radiale und/oder axiale Kräfte aufnehmen und gleichzeitig eine Rotation der Welle oder der so auf einer Achse gelagerten Bauteile, beispielsweise ein Rad, ermöglichen.

Kugellager sind eine Untergruppe solcher Wälzlager, bei denen Kugeln als Wälzkörper dienen (andere Wälzlageruntergruppen sind beispielsweise Zylinderrollenlager, Kegelrollenlager, Nadellager, Tonnenlager oder Toroidalrollenlager - mit jeweils entsprechenden Wälzkörpern, wie Zylinderrollen, Kegelrollen usw.) .

Kugellager-Käfige zum Anordnen der einzelnen Kugeln eines Kugellagers bzw. eines Kugelsatzes (d. h., alle in einer Umfangsreihe in einem Kugellager angeordnete Kugeln) eines Kugellagers sind ebenfalls bekannt und haben die Aufgabe, die Kugeln (des Kugelsatzes in dem Kugellager) in Umfangsrichtung des Kugellagers in annähernd gleichen Abständen auf Position zu halten. Dabei bzw. dazu sind die Kugeln jeweils in durch den Kugellager-Käfig ausgebildeten sogenannten Kugeltaschen aufgenommen.

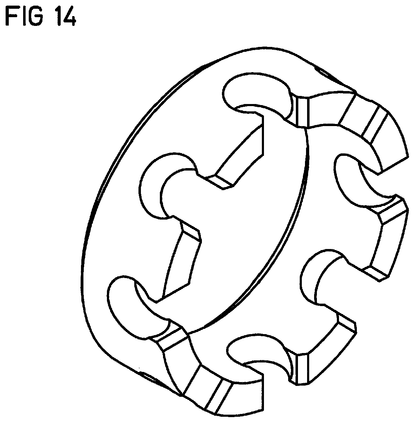

Verschiedene Ausführungen von solchen Kugellager-Käfigen sind auch bekannt, wie beispielsweise Fensterkäfige (gelegentlich auch Massivkäfige genannt), und ein- (Fig. 14) oder zweiteilige Schnappkäfige.

Bei einem Fensterkäfig eines Kugellagers sind die Wälzkörper, d. h. die Kugeln, in durch den Fensterkäfig - in der Regel einstückig - ausgebildeten geschlossenen Profilen, d. h., den Kugeltaschen, eingesetzt.

Hingegen werden die Kugeln bei einem Schnappkäfig eines Kugellagers (Fig. 14) durch - an einem ringförmigen Körper, einem sogenannten Käfigrücken, axial auskragend und im Wesentlichen gleichmäßig in Umfangsrichtung des Kugellagers verteilt angeordnete - Stege in Position gehalten. Jeweils zwei in Umfangsrichtung des Kugellagers benachbart angeordnete Stege bilden dabei bei einem solchen Schnappkäfig eine Kugeltasche für die Aufnahme einer bzw. der Kugel aus, deren - weil nicht als geschlossenes Profil ausgebildet - Schnappöffnung, d. h. der freie Abstand zwischen zwei in Umfangsrichtung des Kugellagers benachbarten Stegenden, im Regelfall kleiner als ein jeweiliger Kugeldurchmesser der in der Kugeltasche aufgenommenen Kugel ist (der mittlere Abstand jeweils zwei in Umfangsrichtung benachbarter Stege in Umfangrichtung entspricht in etwa dem Kugeldurchmesser), wodurch die Kugeltasche bzw. der Kugellager-Käfig - bei einer Montage des Kugellagers - über die Kugel einschnappt.

Zweiteilige Schnappkäfige sehen zusätzlich zu dem - dann ersten - Käfigteil, d. h., dem mit den auskragenden Stegen versehenen Käfigrücken, ein ein Gegenstück dazu bildendes, zweites Käfigteil vor, welches - ebenfalls meist als ringförmiges Teil ausgebildet - die Schnappöffnungen des ersten Käfigteils schließt/verriegelt - und so das erste Käfigteil verstärkt/versteift.

Darüber hinaus sind weiter bei solchen Kugellager-Käfigen Niet- und Lappenkäfige bekannt.

Diese Niet- und Lappenkäfige sind ähnlich zweiteiligen Schnappkäfigen aus zwei zusammengehörigen, in diesem Fall im Wesentlichen symmetrischen Käfigteilen aufgebaut, deren jedes Käfigteil jeweils eine Hälfte einer Kugeltasche ausbildet bzw. beisteuert und welche - erst aneinandergefügt - die vollständigen Kugeltaschen bilden. Werden die beiden Käfigteile solcher Kugellager-Käfige (an den Käfigrücken zwischen jeweils zwei Kugeltaschen) miteinander vernietet, liegen Nietkäfige vor; werden die beiden Käfigteile (dort) "geklammert", liegen Lappenkäfige vor.

Kugellager-Käfige können aus verschiedenen Materialien - abhängig vom Einsatz des jeweiligen Kugellager-Käfigs bzw. Kugellagers und diesbezüglichen Anforderungen, wie Drehzahl und/oder Reibung, - hergestellt sein, wie Stahl oder Kunststoff.

Schnapp-, Lappen- und Nietkäfige für Kugellager aus Stahl (Blechkäfige) werden meist in Motorenlagerungen eingesetzt und sind bei niedrigen bis mittleren Drehzahlen bzw. bei Anforderungen bezüglich eines niedrigen Reibmoments gut geeignet.

Bei Anwendungen im Hochgeschwindigkeitsbereich, d.h. bei Drehzahlkennwerten n × dm ≥ 1.000.000 mm/min (wobei n der Innenringdrehzahl und dm dem mittleren Lagerdurchmesser entspricht, wobei der mittlere Lagerdurchmesser dm sich berechnet aus der durch zwei dividierten Summe aus Außendurchmesser und Bohrungsdurchmesser), werden häufig Kugellager mit speziellen Innengeometrien verwendet, die über einen Schnappkäfig aus einem Hochleistungskunststoff, wie Polyetheretherketon (PEEK), verfügen.

Diese Kunststoff-(Schnapp-)Käfige von solchen Hochgeschwindigkeits-Kugellagern werden aus Genauigkeitsgründen durch spanende Formgebung gefertigt und sind daher im Vergleich zu den genannten Stahlkäfigen, bei denen es sich um Stanz- und Umformteile handelt, deutlich teurer in der Herstellung.

Fig. 14 zeigt einen Kunststoff-(Schnapp-)Käfig eines Kugellagers im Standarddesign, welcher - anstelle der teuren Herstellung durch spanende Formgebung - auch durch Spritzgießen herstellbar ist.

Die Fertigung eines derartigen Kunststoff-(Schnapp-)Käfigs durch Spritzgießen führt aber zwangsläufig zu Ungenauigkeiten am Kunststoff-(Schnapp-)Käfig, die deutliche Leistungseinbußen in einem Hochgeschwindigkeits-Kugellager zur Folge haben.

Die Ursachen dafür, d.h. für die Ungenauigkeiten, liegen im Konzept des Spritzgießwerkzeugs.

Die radial einzubringenden Kugeltaschen des Kunststoff-(Schnapp-)Käfigs müssen aus Gründen der Entformbarkeit des Kunststoff-(Schnapp-)Käfigs über verfahrbare Schieber realisiert werden, durch die beim Erkalten des Spritzlings ungleichmäßige Schwindungen auftreten mit dem zusätzlichen Phänomen der Ausbildung von Schwimmhäuten.

Aus DE 10 2017 105 019 A1, CH 357 64 A und DE 29 602 481 U1 ist jeweils ein mit einer Mehrzahl von Kugeln bestücktes Kugellager mit einem Innenring, einem Außenring und einem die Kugeln aufnehmenden Kugellager-Käfig bekannt. DE 29 602 481 U1 beschreibt ein Kugellager gemäß dem Oberbegriff des Anspruchs 1.

Die dortig beschriebenen Kugellager weisen jeweils ein Kugellager-Käfig auf, bei welchem ein Käfigrücken vorgesehen ist, an welchem in Umfangsrichtung axial mit einer vorgegebenen axialen Länge auskragende Stege angeordnet sind, welche eine Mehrzahl von einseitig axial offenen Kugeltaschen zur Aufnahme von den Kugeln ausbilden. An radialen Innenseiten der Stege sind Führungsabschnitte ausgebildet zum in einen Eingriff bringen mit einer Laufrille eines Kugellagerinnenrings.

Um einen Drehwiderstand in dem Kugellager zu verringern, indem eine Abscherung von Schmierfett, das sich in einem Ringraum zwischen dem Innenring und dem Außenring befindet, soweit als möglich verringert wird, ist nach der DE 10 2017 105 019 A1 vorgesehen, dass die axiale Länge der Stege 30% oder mehr und 50% oder weniger eines Durchmessers der Kugeln entspricht. Der Erfindung liegt die Aufgabe zugrunde, die Nachteile und Einschränkungen im Stand der Technik zu überwinden. Insbesondere liegt der Erfindung die Aufgabe zugrunde, ein neues Kugellager mit einem neuen Käfigdesign für einen Kugellager-Käfig zu konzipieren, das gute Leistungseigenschaften im Kugellager gewährleistet, insbesondere im Hinblick auf Reibung, Geräusch und Lebensdauer. Auch soll durch das neue Käfigdesign des Kugellager-Käfigs ein einfaches Werkzeugkonzept realisierbar sein, so dass die Genauigkeiten des Kugellager-Käfigs nach dem Entformen aus dem Spritzgießwerkzeug deutlich verbessert werden. Darüber hinaus soll das neue Käfigdesign für einen Kugellager-Käfig Anforderungen an ein Hochgeschwindigkeitslager gerecht werden.

Diese Aufgaben werden durch ein einen Kugellager-Käfig aufweisendes Kugellager mit den Merkmalen gemäß dem unabhängigen Patentanspruch 1 gelöst.

Der Kugellager-Käfig des erfindungsgemäßen Kugellagers sieht einen radial umlaufenden, ringförmigen Körper ("Käfigrücken") vor, an welchem - in Umfangsrichtung des Kugellager-Käfigs bzw. des radial umlaufenden, ringförmigen Körpers bzw. Käfigrückens - im Wesentlichen gleichmäßig verteilte, axial mit einer vorgebbaren axialen Länge auskragende Stege angeordnet sind, welche eine Mehrzahl von einseitig axial offenen Kugeltaschen zur Aufnahme von einer entsprechenden Anzahl von Kugeln mit einem vorgebbaren Kugeldurchmesser ausbilden.

Die - vorgebbare - axiale Länge der Stege entspricht in etwa dem Kugeldurchmesser der in der Kugeltasche aufzunehmenden bzw. aufgenommenen Kugel - zuzüglich eines "Überstands".

Des Weiteren ist die - vorgebbare - axiale Länge der Stege derart bemessen, dass ein Steg - mit dem axialen Überstand - soweit axial über die Kugel hinausragt, dass der Steg - ist der Kugellager-Käfig in einem Kugellager (aus Kugellageraußenring, Kugellagerinnenring (inkl. Kugelsatz)) montiert - axial in den Bereich radial zu einer zweiten, (axial) fernen Schulter eines der Kugellagerringe hineinragt (die erste, (axial) nahe Schulter des Kugellagerinnen- oder Kugellageraußenrings liegt axial im Bereich radial zum Käfigrücken des Kugellager-Käfigs) bzw. axial in den Bereich radial zwischen den zweiten, (axial) fernen Schultern von beiden Kugellagerringen (d.h., des Kugellagerinnen- und Kugellageraußenrings) hineinragt.

D.h., die - vorgebbare - axiale Länge der Stege ist derart bemessen, dass ein axial freies Ende eines Stegs axial in den Bereich radial zu der zweiten, (axial) fernen Schulter des Kugellagerinnen- und/oder Kugellageraußenrings hineinragt.

Kurz, der Steg überdeckt axial - zumindest bereichsweise - (auch) die zweite, (axial) ferne Schulter eines der Kugellagerringe (d.h., des Kugellagerinnen- und/oder Kugellageraußenrings) .

Ist der Kugellager-Käfig dann im Kugellager schultergeführt, d.h. Kugellagerinnenringschulter-geführt oder Kugellageraußenringschulter-geführt, so kann - wird nämlich dann der (montierte) Kugellager-Käfig (mit derart axial-langen Stegen) auf den beiden bzw. den zwei Schultern (d.h., auf der ersten, (axial) nahen und der zweiten, (axial) fernen Schulter des jeweiligen Kugellagerrings (d.h., des Kugellagerinnen- oder Kugellageraußenrings) geführt - dadurch ein exakter, konzentrischer und stabiler Lauf des Kugellager-Käfigs gewährleistet werden.

"In etwa" kann dabei ausdrücken, dass die - vorgebbare - axiale Länge der Stege Fertigungstoleranzen unterliegen kann.

Vereinfacht und anschaulich ausgedrückt, an dem ringförmigen Körper bzw. Käfigrücken sind - in der Umfangsrichtung insbesondere im Wesentlichen gleichverteilte und insbesondere im Wesentlichen gleich ausgebildete - axial (d. h., die Erstreckung in Axialrichtung des Kugellager-Käfigs) auskragende Stege angeordnet, welche die durch sie ausbildbaren Kugeltaschen in der Umfangsrichtung begrenzen.

Eine weitere Begrenzung erfährt die durch die zwei benachbarten (mit vorgebbaren (radial umlaufenden) Abstand beabstandeten), axial auskragenden Stege gebildete Kugeltasche durch einen - in Umfangsrichtung - zwischen den beiden Stegen an dem radial umlaufenden, ringförmigen Körper ausgebildeten Kalottenboden.

Dieser Kalottenboden kann eine, insbesondere entsprechende einer Kugeloberfläche der in der Kugeltasche aufzunehmenden bzw. aufgenommenen Kugel, gewölbte ("konkave") - oder eine ebene ("gerade") Fläche (gegebenenfalls inklusive Übergangsradien bei der "geraden" Fläche) aufweisen.

Ein Durchmesser der gewölbten bzw. konkaven Fläche kann dabei auch geringfügig größer als der Kugeldurchmesser der in der Kugeltasche aufzunehmenden bzw. aufgenommenen Kugel sein. Weisen die (axial auskragenden) Stege die axiale Länge von mindestens dem Kugeldurchmesser zuzüglich des "Überstands" auf, so ist die axiale Erstreckung der - jeweiligen durch in der Umfangsrichtung (mit Abstand beabstandeten) benachbarten Stege ausgebildeten - Kugeltasche ("axiale Tiefe einer Kugeltasche") der Kugeldurchmesser zuzüglich des Überstands. D.h. einfach und anschaulich, eine bzw. die Kugeln (des Kugelsatzes des Kugellagers) kann bzw. können (bei entsprechendem - in der Umfangsrichtung des ringförmigen Körpers bzw. des Kugellager-Käfigs - Abstand zwischen jeweils zwei in der Umfangsrichtung benachbarten Stege (auch "Stegabstand" oder "Kugeltaschenbreite") vollständig - axial - in der bzw. den Kugeltaschen des Kugellager-Käfigs aufgenommen werden.

Darüber hinaus wird aufgrund des axialen "Überstands" bei der axialen Länge eines Stegs - der Steg auf beiden bzw. den zwei Schultern, d.h. der ersten, (axial) nahen Schulter und der zweiten, (axial) fernen Schulter des jeweiligen Kugellagerings schulter-geführt werden.

Der Abstand - in der Umfangsrichtung des ringförmigen Körpers bzw. des Kugellager-Käfigs - zwischen jeweils zwei in der Umfangsrichtung benachbarten Stege bzw. der Stegabstand/die Kugeltaschenbreite kann dabei in etwa dem Kugeldurchmesser - mit gegebenenfalls gegebenen Toleranzen und gegebenenfalls mit bestimmtem Kugeltaschenspiel - entsprechen.

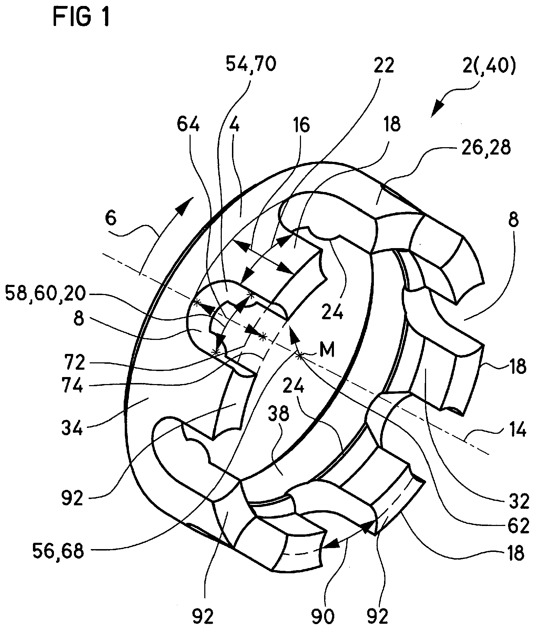

Dieser Abstand zwischen den zwei in der Umfangsrichtung benachbarten Stegen bemisst sich, d. h., kann gemessen werden, insbesondere an einer axialen, d. h., die Erstreckung einer Kugeltasche in Axialrichtung des Kugellager-Käfigs, Mitte einer Kugeltasche ("mittlere axiale Tiefe einer Kugeltasche") sowie - in etwa - an einer mittleren radialen, d. h., die Erstreckung eines Steges radial hin zu bzw. weg von einem Mittelpunkt M des Kugellager-Käfigs, Höhe eines Steges bzw. der Stege ("mittlere radiale Höhe eines Steges") - und ist die Länge des entsprechenden, sich zwischen den zwei Stegen diesbezüglich ausbildenden Kreisbogens ("mittlerer Stegabstand" bzw. "mittlere Kugeltaschenbreite", vgl. FIG 1).

Kurz, der mittlere Stegabstand bzw. die mittlere Kugeltaschenbreite zwischen jeweils zwei in der Umfangsrichtung benachbarten Stegen kann bei dem Kugellager-Käfig in etwa der Kugeldurchmesser der in der Kugeltasche aufzunehmenden bzw. aufgenommenen Kugel sein - gegebenenfalls zuzüglich Toleranzen und einem Kugeltaschenspiel.

Dabei kann insbesondere dann auch der freie Abstand zwischen zwei in Umfangsrichtung des Kugellager-Käfigs benachbarten Stegenden ("Kugeltaschenöffnung (an den Stegenden)") mindestens so groß wie der jeweilige Kugeldurchmesser der in der Kugeltasche aufgenommenen Kugel sein.

Kurz und anschaulich, die durch die freien Stegenden gebildete Öffnung bzw. (in der Umfangsrichtung verlaufende) Öffnungsbreite einer Kugeltasche bzw. die Kugeltaschenöffnung an den Stegenden kann insbesondere mindestens so groß wie der Kugeldurchmesser sein - , wodurch so die Kugeltasche bzw. der Kugellager-Käfig - bei einer Montage des Kugellagers - über die Kugel (einfach) eingeschoben wird und das Einschnappen (bzw. Verriegeln) mit dem Kugelsatz, wie bei einem herkömmlichen Schnappkäfig (hier ist der "freie" Abstand zwischen zwei in Umfangsrichtung des Kugellagers benachbarten Stegenden bzw. die "Kugeltaschenöffnung an den Stegenden" im Regelfall kleiner als ein jeweiliger Kugeldurchmesser der in der Kugeltasche aufgenommenen Kugel), entfällt.

Insbesondere für ein derartiges Kugellager-Käfig-Design (ohne Schnappverriegelung), welches - anstelle des herkömmlichen Schnappmechanismus - dann einen andersartigen Verriegelungsmechanismus für den Kugellager-Käfig erfordert, welcher verhindert, dass der Kugellager-Käfig sich axial aus dem Kugelsatz (heraus-)verschiebt - und so das Kugellager seinen Kugellager-Käfig bzw. der Kugellager-Käfig seine Kugeln verlieren würde, ist bei dem Kugellager-Käfig weiterhin vorgesehen, dass zumindest bei einem bzw. an einem Steg ein Führungsabschnitt zum in einen Eingriff bringen mit einer Laufrille eines Kugellagerrings ausgebildet ist.

Anders und anschaulich ausgedrückt, wird dieser Führungsabschnitt mit einer Laufrille eines Kugellagerrings in einen Eingriff gebracht, so verhindert ein dadurch möglicher Formschluss - zwischen dem Führungsabschnitt und der Laufrille -, dass sich der Kugellager-Käfig axial aus dem Kugellager bzw. axial weg von dem Laufring verschiebt und so das Kugellager seinen Kugellager-Käfig bzw. der Kugellager-Käfig seine Kugeln verliert ("Haltefunktion") .

Der Führungsabschnitt kann dabei einerseits - zum in einen Eingriff bringen mit einer Laufrille eines Kugellageraußenrings - an einer radialen Außenseite des Stegs ausgebildet sein. Ein solcher Kugellager-Käfig kann dann insbesondere Kugellageraußenringschulter-geführt sein.

Der Führungsabschnitt kann aber auch andererseits - zum in einen Eingriff bringen mit einer Laufrille eines Kugellagerinnenrings - an einer radialen Innenseite des Stegs ausgebildet sein. Hier kann dann ein solcher Kugellager-Käfig insbesondere Kugellagerinnenringschulter-geführt sein.

Indem der Kugellager-Käfig schultergeführt ist, d.h. Kugellagerinnenringschulter-geführt oder Kugellageraußenringschultergeführt, so kann dadurch ein exakter, konzentrischer Lauf des Kugellager-Käfigs gewährleistet werden.

Unter einem - den Eingriff mit der Laufrille eines Kugellagerrings ermöglichenden - Führungsabschnitt kann dabei jedes Element verstanden werden, welches - insbesondere aufgrund ihrer (räumlichen) Form und/oder Ausprägung - geeignet ist, einen Formschluss mit einem weiteren Element, in diesem Fall der Laufrille (des Kugellagerrings bzw. des Kugellagerinnen-/-außenrings) herzustellen.

Beispielsweise kann ein solcher Führungsabschnitt ein - insbesondere - einstückig mit dem bzw. an dem Steg ausgebildeter Abschnitt insbesondere eine Rippe sein, welche sich insbesondere im Wesentlichen über eine gesamte Breite des Steges in Umfangsrichtung an dessen radialen Außen- bzw. Innenseite erstreckt.

Eine Breite eines Steges meint insbesondere dessen (radiale) Erstreckung, anschaulich gesehen eine (Kreisbogen-)Länge, in der Umfangsrichtung des Kugellager-Käfigs (vgl. FIG 1) - und kann an einem radialen Außenumfang des Kugellager-Käfigs, an der mittleren radialen Höhe der Stege und an einem radialen Innenumfang des Kugellager-Käfigs gemessen werden.

Eine solche Rippe bzw. der Führungsabschnitt kann dabei in etwa der mittleren axialen Tiefe einer Kugeltasche an dem Steg angeordnet bzw. ausgebildet sein.

Insbesondere kann eine solche Rippe bzw. der Führungsabschnitt an einer derart axialen Position an dem Steg angeordnet bzw. ausgebildet sein, dass sich - im Eingriff des Stegs bzw. der Rippe/des Führungsabschnittes mit der Laufrille eines Kugellagerrings - ein Axialspiel - vergleichbar wie bei normalen Schnappkäfigen - ausbildet.

Anders vereinfacht ausgedrückt, der Führungsabschnitt bzw. die Rippe kann axial so/dort am Steg angeordnet bzw. ausgebildet sein, dass - "schnappt" (bei Montage des Kugellagers) der Führungsabschnitt bzw. die Rippe in die Laufrille ein, ein bisschen (axiale) Luft ((geringfügiges) Axialspiel) zwischen der Rippe/des Führungsabschnitts und der Laufrille bzw. dortigem Kalottenboden ausgebildet ist. D.h., der Kugellager-Käfig kann mit einem Axialspiel in dem Kugellager geführt werden.

Die Haltefunktion durch den Formschluss kann verbessert werden, wenn bei bzw. an einer Mehrzahl von Stegen, insbesondere bei allen Stegen, jeweils der Führungsabschnitt, insbesondere positionsgleich bei im Wesentlichen identischen Stegen, ausgebildet ist oder dass bei jedem vierten oder jedem dritten oder jedem zweiten der Stege jeweils der Führungsabschnitt, insbesondere positionsgleich bei im Wesentlichen identischen Stegen, ausgebildet ist.

Der Formschluss - zwischen dem Führungsabschnitt und der Laufrille -, welcher verhindert, dass sich der Kugellager-Käfig axial aus dem Kugellager bzw. axial weg von dem Laufring verschiebt und so das Kugellager seinen Kugellager-Käfig bzw. der Kugellager-Käfig seine Kugeln verliert ("Haltefunktion"), kann - bei montiertem Kugellager - permanent ausgelegt sein bzw. auftreten - oder auch nur dann auftreten, wenn sich der Kugellager-Käfig axial aus dem Kugellager zu verschieben droht.

Über die reine Haltefunktion durch den Führungsabschnitt (, durch welche Haltefunktion bzw. welchen Führungsabschnitt verhindert wird, dass sich der Kugellager-Käfig axial aus dem Kugellager bzw. axial weg von dem Laufring verschiebt) hinaus, kann der Führungsabschnitt - bei entsprechender Positionierung (am Steg) und/oder Dimensionierung und/oder Formgestaltung des Führungsabschnitts - zusätzlich auch eine Führungsfunktion (d.h. hier erfolgt die Führung des Kugellager-Käfigs in der Laufrille des Kugellagerrings durch den Führungsabschnitt - vgl. auch permanenter Formschluss) und/oder Positionierungsfunktion (d.h., hier erfolgt die axiale und/oder radiale Positionierung des Kugellager-Käfigs über den Führungsabschnitt - vgl. auch permanenter Formschluss) übernehmen.

Die Stege können insbesondere eine bikonkave Form aufweisen, dessen Wölbungen/Krümmungen (nach "innen") der Form der Kugeln ("Kreis/-bogen") angepasst sind.

Ein großer Vorteil des Kugellager-Käfigs besteht auch in seinem Herstellungsprozess.

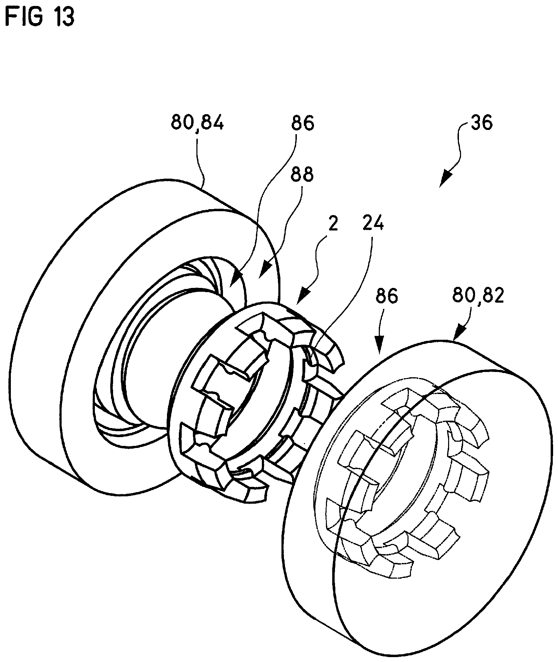

Wird der Kugellager-Käfig durch Spritzgießen hergestellt, so kann - aufgrund des Käfig-Design des Kugellager-Käfigs, hier insbesondere bei entsprechender Kugeltaschenausbildung ohne Schnappfunktion (d.h., die "Kugeltaschenöffnung an den Stegenden" ist mindestens so groß wie der jeweilige Kugeldurchmesser der in der Kugeltasche aufgenommenen Kugel), - das Spritzgießwerkzeug, in diesem Fall ein 2-teiliges Spritzgießwerkzeug mit einem Oberteil und einem über eine Trennfuge mit dem Oberteil verbundenen bzw. verbindbaren Unterteil, sehr einfach ausgeführt sein (Fig. 13).

Der Führungsabschnitt liegt dabei in der Trennfuge des 2-teiligen Spritzgießwerkzeugs, so dass ein vollständiges, formschlüssiges Entformen des Spritzlings durch Öffnen des Werkzeug-Oberteils erfolgen kann.

Durch den Wegfall von den - bislang bei herkömmlichen Kunststoff-(Schnapp-)Käfigen notwendigen - radial angeordneten (zu Ungenauigkeiten führenden und die Ausbildung von Schwimmhäuten erzeugenden) Schiebern, die in Umfangsrichtung in einer gleichmäßigen Winkelteilung gemäß der Anzahl der Kugeln zu berücksichtigen sind, kann ein hochgenauer Kugellager-Käfig gefertigt werden.

Darüber hinaus können die Werkzeugkosten durch die Tatsache, dass das (Spritzgieß-)Werkzeug sehr einfach aufgebaut ist, deutlich gesenkt werden.

Auch erweist sich bei dem Kugellager-Käfig von Vorteil, dass sein Design es ermöglicht, diesen auch in Miniatur- und/oder Hochgeschwindigkeitskugellagern einzusetzen, wie üblicherweise Kugellager für Dentalanwendungen, beispielsweise in Dentalturbinen.

Das Kugellager weist - neben dem Kugellager-Käfig - einen Kugellagerinnenring, einen Kugellageraußenring und eine Vielzahl von Kugeln mit dem vorgebbaren Kugeldurchmesser auf, wobei die Vielzahl der Kugeln der Anzahl der durch den Kugellager-Käfig - bei montiertem Kugellager-Käfig - ausgebildeten Kugeltaschen entsprechen ("Kugelsatz") und jeweils eine von den Kugeln (des Kugelsatzes) in eine von den Kugeltaschen aufgenommen ist. Der Führungsabschnitt - gegebenenfalls eine Mehrzahl von Führungsabschnitten, deren jeder an einem Steg des Kugellager-Käfigs angeordnet ist, - ist bzw. sind mit einer Laufrille des Kugellagerinnenrings oder des Kugellageraußenrings in einem Eingriff .

Ein solches Kugellager - mit dem Kugellager-Käfig - kann insbesondere ein Radial-Rillenkugellager, ein Angularkontaktlager, ein Axial-Rillenkugellager, ein Schrägkugellager, ein Vierpunktlager oder ein Schulterkugellager sein.

Der Kugellager-Käfig kann zumindest teilweise, insbesondere vollständig, aus Kunststoff, insbesondere aus Polyetheretherketon (PEEK), Polyetherketon (PEK), Polyphenylensulfid (PPS), Polyphenylsulfon (PPSU), Polyamidimid (PAI), Polyimid (PI) oder Phenolharz (PF), insbesondere Baumwollgewebe-verstärktes Phenolharz (PF), bestehen.

Auch ist vorgesehen, dass der Kugellager-Käfig bei dem Kugellager als Innenring-geführter Käfig oder als Außenringgeführter Käfig, insbesondere als Innenring-geführter Käfig ausgeführt ist. Dabei gleitet ein Außenumfang des Kugellager-Käfigs an einem Innenumfang des äußeren Laufrings bzw. ein Innenumfang des Kugellager-Käfigs an einem Außenumfang des inneren Laufrings.

Der Kugellageraußenring (auch äußere Laufring) und/oder der Kugellagerinnenring (auch innere Laufring) können beispielsweise aus Chromstahl gefertigt sein, wie beispielsweise aus 100Cr6 (Werkstoff-Nr. 1.3505), ein Stahl mit einem Gehalt von ca. 1 % Kohlenstoff und 1,5 % Chrom. Weitere mögliche Stähle - für den äußeren und/oder inneren Laufring - sind zum Beispiel 100CrMn6 und 100CrMo6; die Legierungselemente Mangan (Mn) und Molybdän (Mo) dienen hier der besseren Durchhärtbarkeit.

Für Anwendungen des Kugellagers in korrosiver Umgebung können auch die hochlegierten Stähle X65Cr13 (Werkstoff-Nr. 1.4037) und X105CrMo17 (Werkstoff-Nr. 1.4125) oder X30CrMoN15-1 (Werkstoff-Nr. 1.4108) - bei dem inneren und/oder äußeren Laufring - verwendet werden. Letzterer Stahl kann, zumindest für einige Tage, auch im menschlichen Organismus zum Einsatz kommen.

Für besondere Betriebsbedingungen kann das Kugellager auch als Hybridlager (zwei Werkstoffe), bei denen die Lagerringe bzw. Laufkränze, aus Stahl und die Kugeln aus Keramik bestehen, zum Beispiel bei Spindellagern für Werkzeugmaschinen, oder als Keramiklager, bei denen sowohl die Laufkränze, als auch die Kugeln aus Keramik bestehen, oder auch als Kunststofflager mit Kugeln aus Glas oder Keramik gegen aggressive Säuren oder Laugen in der Chemie- und Lebensmittelindustrie vorgesehen sein.

Bevorzugte Weiterbildungen der Erfindung ergeben sich auch aus den abhängigen Ansprüchen.

So kann bevorzugt vorgesehen sein, dass der Führungsabschnitt an einer radialen Außenseite des Stegs ausgebildet ist zum in einen Eingriff bringen mit einer Laufrille eines Kugellageraußenrings oder dass der Führungsabschnitt an einer radialen Innenseite des Stegs ausgebildet ist zum in einen Eingriff bringen mit einer Laufrille eines Kugellagerinnenrings.

Ferner kann auch vorgesehen sein, dass der Führungsabschnitt einstückig mit dem Steg ausgebildet ist, insbesondere an einer solchen axialen Position an dem Steg, dass der Kugellager-Käfig mit einem Axialspiel in einem Kugellager geführt werden kann.

Nach einer weiteren bevorzugten Weiterbildung ist vorgesehen, dass bei einer bzw. an einer Mehrzahl von Stegen, insbesondere bei allen Stegen, jeweils der Führungsabschnitt, insbesondere positionsgleich bei im Wesentlichen identischen Stegen, ausgebildet ist oder dass bei jedem vierten oder jedem dritten oder jedem zweiten der Stege jeweils der Führungsabschnitt, insbesondere positionsgleich bei im Wesentlichen identischen Stegen, ausgebildet ist.

Der Führungsabschnitt kann als eine Erhebung, insbesondere eine sich in der Umfangsrichtung erstreckende Erhebung, insbesondere eine sich in der Umfangsrichtung erstreckende Rippe, ausgebildet sein.

Insbesondere kann sich eine solche in der Umfangsrichtung erstreckende Rippe im Wesentlichen über die gesamte Breite des Steges in Umfangsrichtung an dessen radialen Außen- bzw. Innenseite erstrecken.

Auch kann weiterbildend vorgesehen sein, dass ein zwischen jeweils zwei in der Umfangsrichtung benachbarten Stegen an dem radial umlaufenden, ringförmigen Körper ausgebildeter Kalottenboden eine ebene oder gewölbte Fläche aufweist.

Bevorzugt kann auch vorgesehen sein, dass die Stege eine in der Axialrichtung zylindrische radiale Außenfläche aufweisen. Diese Ausgestaltung bzw. dieses Käfigdesign kann vorzugsweise in Rillenkugellagern eingesetzt werden, bei denen sich Kalotten-Nasen Drehzahl-bedingt durch im Kugellager auftretende Fliehkräfte nicht nach außen aufbiegen.

Alternativ dazu, kann auch vorgesehen sein, dass die Stege eine in der Axialrichtung konische radiale Außenfläche, insbesondere mit einem Konuswinkel zwischen in etwa 2° und in etwa 20°, insbesondere zwischen in etwa 7° und in etwa 12°, aufweist. Dadurch können sich die Kalotten-Nasen Drehzahl-bedingt durch die im Kugellager auftretenden Fliehkräfte nach außen aufbiegen und es kann verhindert werden, dass die dann nach außen gebogenen Kalotten-Nasen Kontakt zu einer Schulter oder einer Laufbahn des äußeren Laufrings aufnehmen.

Weiterhin kann weiterbildend auch vorgesehen sein, dass der Kugellager-Käfig zumindest teilweise, insbesondere vollständig, aus Kunststoff, insbesondere aus Polyetheretherketon (PEEK), Polyetherketon (PEK), Polyphenylensulfid (PPS), Polyphenylsulfon (PPSU), Polyamidimid (PAI), Polyimid (PI) oder Phenolharz (PF), insbesondere Baumwollgewebe-verstärktes Phenolharz (PF), besteht bzw. hergestellt ist/wird.

Bei einer Weiterbildung kann auch vorgesehen sein, dass der Kugellager-Käfig aus einem verschleißfesten oder einem gleitmodifizierten Werkstoff besteht.

Ferner kann weiterbildend auch vorgesehen sein, dass ein Abstand der jeweils zwei in Umfangsrichtung benachbarten Stege in Umfangrichtung (der Stegabstand bzw. die Kugeltaschenbreite) an einem Außenumfang des Kugellager-Käfigs größer ist als ein Abstand der zwei Stege an einem Innenumfang des Kugellager-Käfigs.

Diese unterschiedliche Abstandsbemessung (der Kugeltaschenbreite) am Innen- bzw. Außenumfang führt insbesondere dann dazu, dass die beim Kugellager-Käfig ausgebildeten Kugeltaschen jeweils unterschiedliche Kugeltaschenbreiten (in der Umfangsrichtung) am Außenumfang bzw. Innenumfang des Kugellager-Käfigs aufweisen (Kugeltasche mit "Trichterform").

Ein solches Käfigdesign - mit unterschiedlicher Kugeltaschenbreite (bzw. Stegabstand) am Außenumfang bzw. Innenumfang des Kugellager-Käfigs - (und dessen Herstellung) beschreibt die DE 10 2014 008 763 B4 (Gebrüder Reinfurt GmbH & Co.KG), 17.12.2015 (Offenlegungstag), Absätze [0018] ff. - mit dortigen FIGen 5 bis 7 und 10 bzw. FIGen 15 bis 17 und 20 insbesondere für einen einteiligen Innenring- bzw. Außenring-geführten Schnappkäfig, dessen diesbezüglicher Inhalt so Bestandteil vorliegender Ausführungen wird (in der DE 10 2014 008 763 B4 beschrieben mit "die Länge der Kugeltasche am Außenumfang des Kugellager-Käfigs größer als die Länge der Kugeltasche am Innenumfang des Kugellager-Käfigs ist." (vgl. [0028] der DE 10 2014 008 763 B4).

Weiterhin kann auch vorgesehen sein, dass der (Steg-)Abstand bzw. der mittlere Stegabstand - in der Umfangsrichtung des ringförmigen Körpers bzw. des Kugellager-Käfigs - zwischen jeweils zwei in der Umfangsrichtung benachbarten Stege in etwa dem Kugeldurchmesser - mit gegebenenfalls gegebenen Toleranzen und gegebenenfalls mit bestimmtem Kugeltaschenspiel - entspricht.

Weiter kann hier dann auch vorgesehen sein, dass der "freie" Abstand zwischen zwei in der Umfangsrichtung des Kugellager-Käfigs benachbarten Stegenden ("Kugeltaschenöffnung (an den Stegenden)") auch so groß wie der jeweilige Kugeldurchmesser der in der Kugeltasche aufgenommenen Kugel - mit gegebenenfalls gegebenen Toleranzen und gegebenenfalls mit bestimmtem Kugeltaschenspiel - ist.

Kurz und anschaulich, die durch die freien Stegenden gebildete Öffnung bzw. (in der Umfangsrichtung verlaufende) Öffnungsbreite einer Kugeltasche bzw. die Kugeltaschenöffnung an den Stegenden kann so groß sein wie (in etwa) der Kugeldurchmesser.

Gegebenenfalls kann die Öffnungsbreite der Kugeltaschenöffnung an den Stegenden auch größer als der Kugeldurchmesser sein, um so ein Einschieben des Kugellager-Käfigs auf den Kugelsatz zu erleichtern.

Vorzugsweise kann der Kugellager-Käfig durch spanende Formgebung, durch additive Fertigung, insbesondere durch 3-D-Druck, oder durch Spritzgießen hergestellt werden bzw. hergestellt sein. Vorteile ergeben sich insbesondere bei der Herstellung durch Spritzgießen, wie einfache und kostengünstige Werkzeuge, hochgenaue Kugellager-Käfige mit geringen Toleranzen und/oder Maßabweichungen.

Vorzugsweise kann auch vorgesehen sein, dass der Kugellager-Käfig in einem einreihigen Radial-Rillenkugellager eingesetzt bzw. verwendet wird.

Auch kann vorzugsweise vorgesehen sein, dass der Kugellager-Käfig für/bei Hochgeschwindigkeitsanwendungen angewandt bzw. eingesetzt wird, wie beispielsweise in einer Dentaltechnik, beispielsweise bei einer Dentalturbine, mit einem Drehzahlkennwert im Bereich von etwa n × dm ≥ 1000000 mm/min, wobei n einer Drehzahl des inneren Laufrings entspricht und dm einem mittleren Lagerdurchmesser entspricht. Der mittlere Lagerdurchmesser dm wird als ein Durchschnittswert zwischen einem Außendurchmesser und einem Bohrungsdurchmesser des Kugellagers berechnet.

Bei einer Weiterbildung kann vorgesehen sein, dass die Kugeln des Kugellagers (mit dem Kugellager-Käfig) den vorgebbaren Kugeldurchmesser von kleiner als 5 mm aufweisen.

Vorzugsweise kann das Kugellager (und/oder der Kugellager-Käfig) in einem Dentalgerät, insbesondere in einer Dentalturbine, eingesetzt werden bzw. eingesetzt sein.

Ein Spritzgießwerkzeug für die Herstellung des Kugellager-Käfigs - durch Spritzgießen - verfügt vorzugsweise über zwei über eine Trennfuge zusammenfügbare bzw. trennbare Werkzeugteile, wobei die beiden Werkzeugteile im zusammengefügten Zustand einen den Kugellager-Käfig abbildenden Hohlraum ("Negativform") für den Kugellager-Käfig ausbilden, wobei der Führungsabschnitt in der Trennfuge liegt.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung von einem oder mehreren Ausführungsbeispielen, das bzw. die im Zusammenhang mit den Figuren näher erläutert wird bzw. werden.

Die Erfindung ist jedoch nicht auf die in dem bzw. den Ausführungsbeispielen angegebene Kombination von Merkmalen beschränkt, auch nicht in Bezug auf funktionale Merkmale. So können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht werden.

Gleiche Bauteile, Komponenten u. ä. sind durch gleiche Bezugszeichen in den Figuren gekennzeichnet. Strichpunktierte Linien verdeutlichen Schnitte; durchgezogene Linien (Volllinien) weisen auf Kanten hin.

Es zeigen:
- FIG 1: einen Kugellager-Käfig gemäß einer ersten Ausführung (perspektivisch, zylindrische Außenfläche, Kalottenboden konkav),
- FIG 2: einen Innenring, Kugeln und einen Kugellager-Käfig gemäß der ersten Ausführung (perspektivisch, zylindrische Außenfläche, Kalottenboden konkav),
- FIG 3: ein Radial-Rillenkugellager mit einem Innenring-geführten Kugellager-Käfig gemäß der ersten Ausführung (Schnittansicht, zylindrische Außenfläche, Kalottenboden konkav),
- FIG 4: einen Kugellager-Käfig gemäß einer zweiten Ausführung (perspektivisch, zylindrische Außenfläche, Kalottenboden gerade),
- FIG 5: einen Innenring, Kugeln und einen Kugellager-Käfig gemäß der zweiten Ausführung (perspektivisch, zylindrische Außenfläche, Kalottenboden gerade),
- FIG 6: ein Radial-Rillenkugellager mit einem Innenring-geführten Kugellager-Käfig gemäß der zweiten Ausführung (Schnittansicht, zylindrische Außenfläche, Kalottenboden gerade),
- FIG 7: einen Kugellager-Käfig gemäß einer dritten Ausführung (perspektivisch, konische Außenfläche, Kalottenboden konkav),
- FIG 8: einen Innenring, Kugeln und einen Kugellager-Käfig gemäß der dritten Ausführung (perspektivisch, konische Außenfläche, Kalottenboden konkav),
- FIG 9: ein Radial-Rillenkugellager mit einem Innenring-geführten Kugellager-Käfig gemäß der dritten Ausführung (Schnittansicht, konische Außenfläche, Kalottenboden konkav),
- FIG 10: einen Kugellager-Käfig gemäß einer vierten Ausführung (perspektivisch, konische Außenfläche, Kalottenboden gerade),
- FIG 11: einen Innenring, Kugeln und einen Kugellager-Käfig gemäß der dritten Ausführung (perspektivisch, konische Außenfläche, Kalottenboden gerade),
- FIG 12: ein Radial-Rillenkugellager mit einem Innenring-geführten Kugellager-Käfig gemäß der dritten Ausführung (Schnittansicht, konische Außenfläche, Kalottenboden gerade),
- FIG 13: ein zweiteiliges Spritzgießwerkzeug (Oberteil/Unterteil) zur Herstellung eines Kugellager-Käfigs (hier beispielhaft gemäß der vierten Ausführung, perspektivisch) ,
- FIG 14: einen (einteiligen) Kunststoff-(Schnapp-)Käfig eines Kugellagers im Standarddesign.

### Ausführungsbeispiele:

### Kugellager-Käfig 2 mit zylindrischer oder konischer Außenfläche 26, 28, 30 und mit konkavem oder geradem Kalottenboden 54, 66, 70 (FIGen 1 bis 3, FIGen 4 bis 6, FIGen 7 bis 9, FIGen 10 bis 12)

**FIGen 1 bis 3** zeigen (in verschiedenen Baugruppen, d.h. alleine nur der Kugellager-Käfig 2, Kugellager-Käfig 2 mit Innenring 42 und Kugellager-Käfig 2 eingebaut in ein einreihiges Radial-Rillenkugellager 40) eine erste Ausführung eines Kugellager-Käfigs 2 (**"Kugellager-Käfig 2 mit zylindrischer Außenfläche 28 und konkavem Kalottenboden 70")**.

**FIGen 4 bis 6** zeigen (ebenfalls in den verschiedenen Baugruppen, d.h. alleine nur der Kugellager-Käfig 2, Kugellager-Käfig 2 mit Innenring 42 und Kugellager-Käfig 2 eingebaut in ein einreihiges Radial-Rillenkugellager 40) eine zweite Ausführung eines Kugellager-Käfigs 2 ("**Kugellager-Käfig 2 mit zylindrischer Außenfläche 28 und geradem Kalottenboden 66").**

**FIGen 7 bis 9** zeigen (ebenfalls in den verschiedenen Baugruppen, d.h. alleine nur der Kugellager-Käfig 2, Kugellager-Käfig 2 mit Innenring 42 und Kugellager-Käfig 2 eingebaut in ein einreihiges Radial-Rillenkugellager 40) eine dritte Ausführung eines Kugellager-Käfigs 2 **("Kugellager-Käfig 2 mit konischer Außenfläche 30 und konkavem Kalottenboden 70").**

**FIGen 10 bis 12** zeigen (ebenfalls in den verschiedenen Baugruppen, d.h. alleine nur der Kugellager-Käfig 2, Kugellager-Käfig 2 mit Innenring 42 und Kugellager-Käfig 2 eingebaut in ein einreihiges Radial-Rillenkugellager 40) eine vierte Ausführung eines Kugellager-Käfigs 2 **("Kugellager-Käfig 2 mit konischer Außenfläche 30 und geradem Kalottenboden 66").**

Diese Kugellager-Käfige 2 (nach allen vier genannten Ausführungen - kurz "der Kugellager-Käfig" bzw. "die/alle Kugellager-Käfige") - eines - in diesem Fall - einreihigen Radial-Rillenkugellagers 40 (kurz im Folgenden der Einfachheit halber auch nur "Kugellager" genannt) - weisen, wie die FIGen 1 bis 12 zeigen, einen radial umlaufenden, ringförmigen Körper 4, den Käfigrücken 4, auf, an welchem - in Umfangsrichtung 6 des Kugellager-Käfigs 2 bzw. des Käfigrückens 4 (kurz nur "in bzw. in der Umfangrichtung" 6) - im Wesentlichen gleichmäßig verteilte, identisch zueinander ausgebildete, axial 14 mit einer vorgebbaren axialen Länge 16 auskragende Stege 18 angeordnet sind, welche eine Mehrzahl von einseitig axial 14 offenen Kugeltaschen 8 zur Aufnahme von einer entsprechenden Anzahl von Kugeln 10 mit einem vorgebbaren Kugeldurchmesser 12 ausbilden.

Die Stege 18 sind, wie die FIGen 1 bis 12 zeigen bzw. verdeutlichen, - im Querschnitt - bikonkav, wobei deren beiderseitigen Wölbungen/Krümmungen (nach "innen") der Form der Kugeln 10 ("Kreis/-bogen") angepasst sind.

Dabei nimmt jede ausgebildete Kugeltasche 8 des Kugellager-Käfigs 2 eine Kugel 10 auf. Alle in den ausgebildeten Kugeltaschen 8 des Kugellager-Käfigs 2 aufgenommenen Kugeln 10 werden in ihrer Gesamtheit auch als Kugelsatz 50 (des Kugellagers bzw. des einreihigen Radial-Rillenkugellagers 40) bezeichnet.

Die - vorgebbare - axiale Länge 16 der Stege 18 bei den Kugellager-Käfigen 2 entspricht dabei in etwa dem Kugeldurchmesser 12 der in der Kugeltasche 8 aufzunehmenden (vgl. FIGen 1, 4, 7 und 10) bzw. aufgenommenen Kugel 10 zusätzlich eines Überstands 98 (vgl. FIGen 2, 5, 8 und 11 sowie 3, 6, 9 und 12).

Der Überstand 98 bzw. die axiale Länge 16 der Stege 18 bei den Kugellager-Käfigen 2 ist, wie die FIGen 3, 6, 9 und 12 auch zeigen, derart bemessen, dass die Stege 18 jeweils axial in den Bereich radial zu der zweiten, (axial) "fernen" Schulter 96 des Kugellagerinnenrings 42 hineinragt (die erste, (axial) "nahe" Schulter 94 des Kugellagerinnenrings 94 liegt axial im Bereich radial zum Käfigrücken 4 des Kugellager-Käfigs 2) hineinragen (bzw. axial in den Bereich radial zwischen der zweiten, (axial) "fernen" Schulter 96 des Kugellagerinnenrings 42 und der zweiten, (axial) "fernen" Schulter 96 des Kugellageraußenrings 44 hineinragen).

D.h., die - vorgebbare - axiale Länge 16 der Stege 18 ist derart bemessen, dass die axial freien Enden 92 der Stege 18 in den Bereich radial zu der zweiten, (axial) "fernen" Schulter 96 des Kugellagerinnenrings 42 hineinragen (bzw. axial im Bereich radial zwischen der zweiten, (axial) "fernen" Schulter 96 des Kugellagerinnenrings 42 und der zweiten, (axial) "fernen" Schulter 96 des Kugellageraußenrings 44 liegen).

Kurz, die Stege 18 überdeckt jeweils axial - zumindest bereichsweise - (auch) die zweite, (axial) "ferne" Schulter 96 des Kugellagerinnenrings 42.

Ist nämlich der Kugellager-Käfig 2 dann - wie in diesem Fall - Kugellagerinnenringschulter-geführt , so wird dann der (montierte) Kugellager-Käfig 2 auf den beiden bzw. den zwei Schultern 94, 94 (d.h., auf der ersten, (axial) nahen" 94 und der zweiten, (axial) "fernen" Schulter 96 des Kugellagerinnenrings 92 geführt.

Vereinfacht und anschaulich ausgedrückt, an den Käfigrücken 4 der Kugellagerkäfige 2 sind - in der Umfangsrichtung 6 gleichverteilte und gleich ausgebildete - axial 14 auskragende Stege 18 angeordnet, welche die durch sie ausbildbaren Kugeltaschen 8 in der Umfangsrichtung 6 begrenzen.

Eine weitere Begrenzung erfährt, wie die FIGen 1 bis 12 zeigen, die durch die jeweiligen zwei benachbarten (mit vorgebbaren (radial umlaufenden) Abstand 20 beabstandeten), axial 14 auskragenden Stege 18 gebildete Kugeltasche 8 durch einen - in Umfangsrichtung 6 - zwischen den beiden Stegen 18 an dem Käfigrücken 4 ausgebildeten Kalottenboden 54.

Dieser Kalottenboden 54 kann eine entsprechende einer Kugeloberfläche der in der Kugeltasche 8 aufzunehmenden bzw. aufgenommenen Kugel 10 gewölbte ("konkave") 70 (vgl. FIGen 1 bis 3 und FIGen 7 bis 9) - oder eine ebene ("gerade") Fläche 66 (inkl. Übergangsradien) (vgl. FIGen 4 bis 6 und FIGen 10 bis 10) aufweisen.

Weisen, wie die FIGen 1 bis 12 zeigen, die (axial 14 auskragenden) Stege 18 die axiale Länge 16 von in etwa dem Kugeldurchmesser 12 zuzüglich dem Überstand 98 auf, so ist die axiale Erstreckung 64 der - jeweiligen durch in der Umfangsrichtung 6 (mit Abstand 20 beabstandeten) benachbarten Stege 18 ausgebildeten - Kugeltasche 8 ("axiale Tiefe einer Kugeltasche", 64) auch in etwa der Kugeldurchmesser 12 zuzüglich dem Überstand 98.

Der Kugellager-Käfig 2 ist dabei Kugellagerinnenringschulter-geführt 78 (vgl. FIGen 3, 6, 9 und 12), d. h. der Innenumfang 38 bzw. die Innenumfänge 38 der Kugellager-Käfige 2 gleiten auf dem bzw. den Außenumfängen 76 der inneren Laufringe 42 der Kugellager 40, d.h. auf der ersten, (axial) "nahen" Schulter 94 des inneren Laufrings 42 und der zweiten, (axial) "fernen Schulter 96 des inneren Laufrings 42, so dass ein exakter konzentrischer und stabiler Lauf des Kugellager-Käfigs 2 (im Kugellager 40) gewährleistet werden kann.

D.h. einfach und anschaulich, eine bzw. die Kugeln 10 (des Kugelsatzes 50 des einreihigen Radial-Rillenkugellagers 40) kann bzw. können (bei entsprechendem - in der Umfangsrichtung 6 des Käfigrückens 4 bzw. des Kugellager-Käfigs 2 - Abstand 20 zwischen jeweils zwei in der Umfangsrichtung 6 benachbarten Stege 18 ("Stegabstand bzw. Kugeltaschenbreite", 20)) vollständig (und mit dem Überstand 98 darüber hinaus) - axial 14 - in der bzw. den Kugeltaschen 8 des Kugellager-Käfigs 2 aufgenommen werden.

Der Abstand 20 - in der Umfangsrichtung 6 des Käfigrückens 4 bzw. des Kugellager-Käfigs 2 - zwischen jeweils zwei in der Umfangsrichtung 6 benachbarten Stege 18 bzw. die Kugeltaschenbreite 20 ist, wie die FIGen 1 bis 12 zeigen, in etwa dem Kugeldurchmesser 12 - mit gegebenenfalls gegebenen Toleranzen und gegebenenfalls mit bestimmtem Kugeltaschenspiel - ausgebildet.

Dieser "Abstand" 20 zwischen den zwei in der Umfangsrichtung 6 benachbarten Stegen 18 bemisst sich, d. h., kann gemessen werden, insbesondere an einer axialen 14, d. h., die Erstreckung einer Kugeltasche 8 in Axialrichtung 14 des Kugellager-Käfigs 2, Mitte einer Kugeltasche 58 ("mittlere axiale Tiefe einer Kugeltasche", 58) sowie - in etwa - an einer mittleren radialen 56, d. h., die Erstreckung eines Steges radial 56 hin zu bzw. weg von einem Mittelpunkt M 62 des Kugellager-Käfigs 2, Höhe 60 eines Steges 18 bzw. der Stege 18 ("mittlere radiale Höhe eines Steges", 60) - und ist die Länge des entsprechenden, sich zwischen den zwei Stegen 18 diesbezüglich ausbildenden Kreisbogens 20 ("mittlerer Stegabstand" bzw. "mittlere Kugeltaschenbreite", 20, vgl. FIG 1).

Kurz, der "mittlere Stegabstand" 20 bzw. die "mittlere Kugeltaschenbreite" 20 ist bei dem Kugellager-Käfig 2 in etwa der Kugeldurchmesser 12 der in der Kugeltasche 8 aufzunehmenden bzw. aufgenommenen Kugel 10 - gegebenenfalls zuzüglich Toleranzen und einem Kugeltaschenspiel.

Auch der "freie" Abstand 90 zwischen zwei in Umfangsrichtung 6 des Kugellager-Käfigs 2 benachbarten Stegenden 92 ("Kugeltaschenöffnung (an den Stegenden)", 90) ist, wie die FIGen 1 bis 12 zeigen, in etwa so groß wie der jeweilige Kugeldurchmesser 12 der in der Kugeltasche 8 aufgenommenen Kugel 10.

Kurz und anschaulich, die "Kugeltaschenöffnung 90 an den Stegenden 92" ist in etwa so groß wie der Kugeldurchmesser 12 - , wodurch so die Kugeltasche 8 bzw. der Kugellager-Käfig 2 - bei einer Montage des Kugellagers 40 - über die Kugel 10 (einfach) eingeschoben wird und das Einschnappen (bzw. Verriegeln) mit dem Kugelsatz 50 , wie bei einem herkömmlichen Schnappkäfig (hier ist die "Kugeltaschenöffnung 90 an den Stegenden 92" im Regelfall kleiner als ein jeweiliger Kugeldurchmesser 12 der in der Kugeltasche 8 aufgenommenen Kugel 10), entfällt.

Da für ein derartiges Kugellager-Käfig-Design (ohne Schnappverriegelung) bei dem Kugellager-Käfig 2, welches - anstelle des herkömmlichen Schnappmechanismus - dann einen andersartigen "Verriegelungsmechanismus" für den Kugellager-Käfig 2 erfordert, welcher verhindert, dass der Kugellager-Käfig 2 sich "axial" 14 aus dem Kugelsatz 50 (heraus-)verschiebt - und so das Kugellager 2 seinen Kugellager-Käfig 2 bzw. der Kugellager-Käfig 2 seine Kugeln 10 "verlieren" würde, ist, wie die FIGen 1 bis 12 zeigen, bei dem Kugellager-Käfig 2 vorgesehen, dass an den Stegen 18 des Kugellager-Käfigs 2, d.h., an den radialen Innenseiten 32 der Stege 18, dort in etwa im Bereich der mittleren axialen Kugeltaschentiefe 58 , ein Führungsabschnitt 24 - in Form einer sich über die Breite 22 eines Stegs 18 erstreckenden, einstückig mit dem Steg 18 bzw. dem Kugellager-Käfig 2 ausgebildeten Rippe 24 (vgl. FIGen 1, 4, 7 und 10) - zum in einen Eingriff bringen mit einer Laufrille 46, 48 eines Kugellagerrings 42, 44, d.h. in diesem Fall der Laufrille 46 des Kugellagerinnenrings 42, ausgebildet ist (vgl. FIGen 2, 5, 8 und 11 sowie 3, 6, 9 und 12).

Diese axialen Positionen der Rippen 24 an den radialen Innenseiten 32 der Stege 18 - in etwa im Bereich der mittleren axialen Kugeltaschentiefen 58 - sind deshalb so bemessen, dass - im Eingriff der Stege 18 bzw. der Rippen 24 mit der Laufrille 46 des Kugellagerinnenrings 42 - ein Axialspiel - vergleichbar wie bei "normalen" Schnappkäfig - ausgebildet ist.

Werden so diese Führungsabschnitte 24 bzw. diese Rippen 24 (bei der Montage des Kugellagers 40) mit der Laufrille 46 des Kugellagerinnenrings 42 in einen Eingriff gebracht (vgl. FIGen 2, 5, 8 und 11 sowie 3, 6, 9 und 12), so verhindert ein dadurch möglicher Formschluss - zwischen den Führungsabschnitten 24 bzw. den Rippen 24 und der Laufrille 46 -, dass sich der Kugellager-Käfig 2 axial 14 aus dem Kugellager 40 bzw. axial 14 weg von dem Laufring/Kugellagerinnenring 42 verschiebt und so das Kugellager 40 seinen Kugellager-Käfig 2 bzw. der Kugellager-Käfig 2 seine Kugeln 10 "verliert" ("Haltefunktion") .

Der Kugellager-Käfig 2 ist dabei Kugellagerinnenringschulter-geführt 78 (vgl. FIGen 3, 6, 9 und 12), d. h. der Innenumfang 38 bzw. die Innenumfänge 38 der Kugellager-Käfige 2 gleiten auf dem bzw. den Außenumfängen 76 der inneren Laufringe 42 der Kugellager 40, d.h. auf der ersten, (axial) "nahen" Schulter 94 des inneren Laufrings 42 und der zweiten, (axial) "fernen Schulter 96 des inneren Laufrings 42, so dass ein exakter konzentrischer und stabiler Lauf des Kugellager-Käfigs 2 (im Kugellager 40) gewährleistet werden kann.

Die Kugellager-Käfige 2 sind - mittels Spritzgießens 36 (vgl. FIG 13) - aus einem Hochleistungskunststoff hergestellt, wie beispielsweise Polyetheretherketon (PEEK), Polyetherketon (PEK), Polyphenylensulfid (PPS), Polyphenylsulfon (PPSU), Polyamidimid (PAI) oder Polyimid (PI).

Die äußeren 44 und inneren Laufringe 42 des bzw. der einreihigen Radial-Rillenkugellager 40 sind aus Chromstahl gefertigt, wie beispielsweise aus 100Cr6 (Werkstoff-Nr. 1.3505), ein Stahl mit einem Gehalt von ca. 1 % Kohlenstoff und 1,5 % Chrom.

Die Kugeln 10 des verwendeten Kugelsatzes 50 bei dem bzw. den Kugellager-Käfigen 2 bzw. den Kugellagern 40 weisen einen vorgebbaren Kugeldurchmesser 12 von ca. 1 mm auf. Die einreihigen Radial-Rillenkugellager 40 sind für eine Dentalanwendung, d.h. für eine Dentalturbine, vorgesehen.

Die Kugellager-Käfige 2 - soweit beschrieben - können über ihre bisherige Ausgestaltung, insbesondere ihrer Steggestaltung mit dessen axialen Erstreckung 14 in etwa des Kugeldurchmessers 12 zuzüglich des Überstands 98 und den Führungsabschnitten 24 bzw. Rippen 24 (vgl. FIGen 1 bis 12), hinaus zusätzlich noch verschiedene unterschiedliche Ausgestaltungen hinsichtlich ihrer Außenfläche 26, 28, 30 und ihres Kalottenbodens 54, 66, 70 aufweisen.

### - "Kugellager-Käfig 2 mit zylindrischer Außenfläche 28 und konkavem Kalottenboden 70", FIGen 1 bis 3

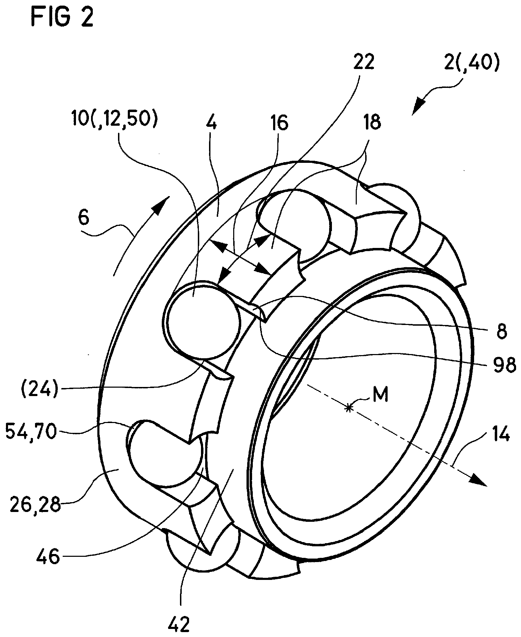

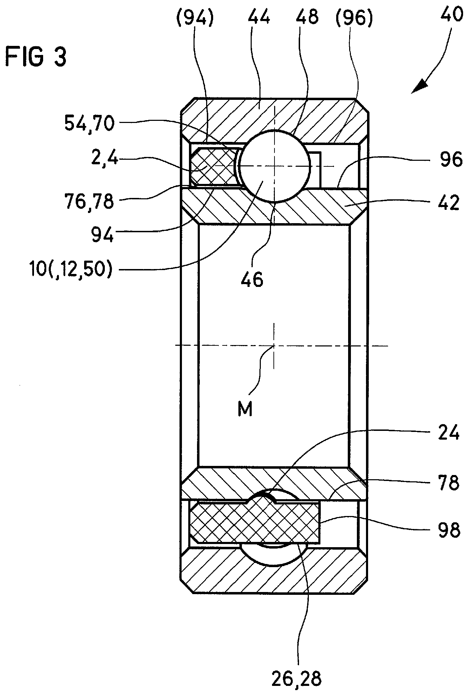

FIGen 1 bis 3 zeigen (in verschiedenen Baugruppen, d.h. alleine nur der Kugellager-Käfig 2 (FIG 1), Kugellager-Käfig 2 mit Innenring 42 (FIG 2) und Kugellager-Käfig 2 eingebaut in ein einreihiges Radial-Rillenkugellager 40 (FIG 3)) eine erste Ausführung des Kugellager-Käfigs 2 mit einer zylindrischen Außenfläche 28 und einem konkaven Kalottenboden 70.

Wie die FIGen 1 bis 3 zeigen, weist der Kugellager-Käfig 2 nach dieser ersten Ausführung bzw. weisen dessen Stege 18 eine in der Axialrichtung 14 zylindrische radiale Außenfläche 28 auf.

Diese Ausgestaltung bzw. dieses Käfigdesign kann vorzugsweise in Rillenkugellagern eingesetzt werden, bei denen sich Kalotten-Nasen Drehzahl-bedingt durch im Kugellager auftretende Fliehkräfte nicht nach außen aufbiegen.

Weiterhin sieht der Kugellager-Käfig 2 nach dieser ersten Ausführung, wie die FIGen 1 bis 3 zeigen, einen Kalottenboden 54 vor, welcher eine entsprechende einer Kugeloberfläche der in der Kugeltasche 8 aufzunehmenden bzw. aufgenommenen Kugel 10 gewölbte ("konkave") Fläche 70 aufweist.

FIG 2 zeigt den - Kugellagerinnenringschulter-geführten 78 - Kugellager-Käfig 2 nach dieser ersten Ausführung zusammen mit dem zugehörigen Kugellagerinnenring 42 und den in den Kugeltaschen 8 aufgenommenen Kugeln 10.

FIG 3 zeigt das - vollständige bzw. vollständig montierte - Kugellager 40 mit dem Kugellagerinnenring 42, dem Kugellageraußenring 44 und dem - Kugellagerinnenringschulter-geführten 78 - Kugellager-Käfig 2 (nach der ersten Ausführung) sowie den in den Kugeltaschen 8 aufgenommenen Kugeln 10.

### - "Kugellager-Käfig 2 mit zylindrischer Außenfläche 28 und geradem Kalottenboden 66", FIGen 4 bis 6

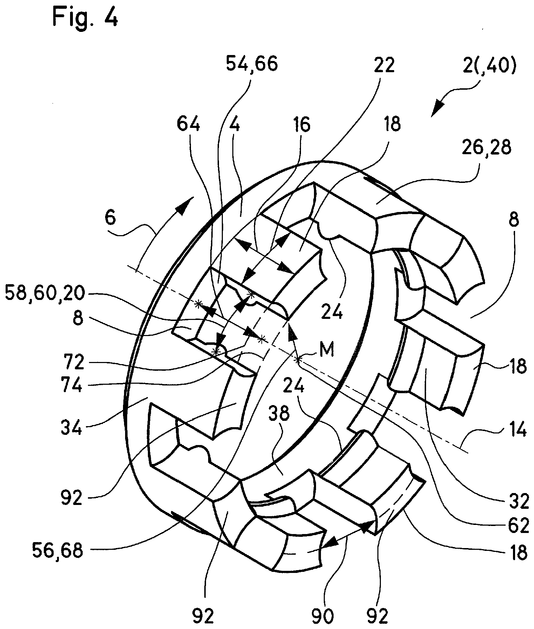

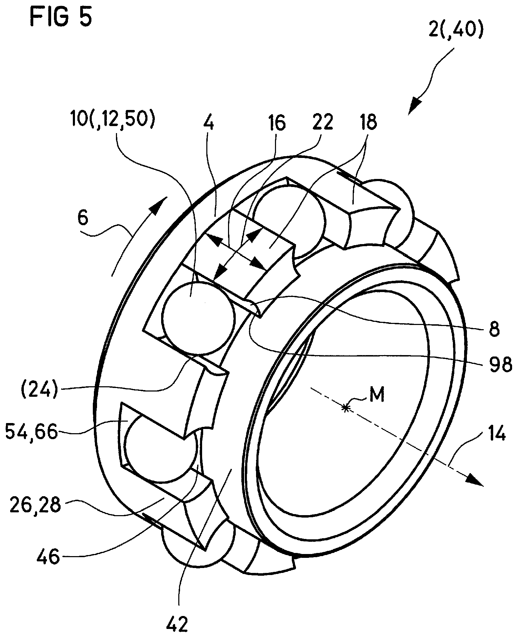

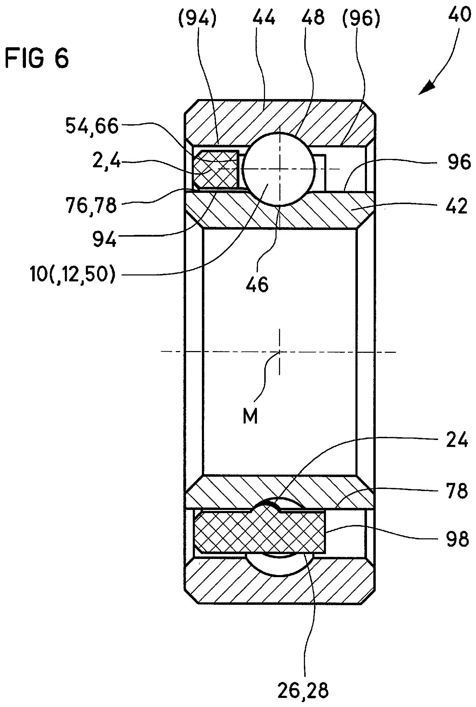

FIGen 4 bis 6 zeigen (ebenfalls in den verschiedenen Baugruppen, d.h. alleine nur der Kugellager-Käfig 2 (FIG 4), Kugellager-Käfig 2 mit Innenring 42 (FIG 5) und Kugellager-Käfig 2 eingebaut in ein einreihiges Radial-Rillenkugellager 40 (FIG 6)) eine zweite Ausführung des Kugellager-Käfigs 2 mit einer zylindrischer Außenfläche 28 und einem geraden Kalottenboden 66.

Wie die FIGen 4 bis 6 zeigen, weist der Kugellager-Käfig 2 nach dieser zweiten Ausführung bzw. weisen dessen Stege 18 auch die in der Axialrichtung 14 zylindrische radiale Außenfläche 28 auf.

Weiterhin sieht der Kugellager-Käfig 2 nach dieser zweiten Ausführung, wie die FIGen 4 bis 6 zeigen, einen Kalottenboden 54 vor, welcher eine ebene ("gerade") Fläche 66 aufweist.

FIG 5 zeigt den - Kugellagerinnenringschulter-geführten 78 - Kugellager-Käfig 2 nach dieser zweiten Ausführung zusammen mit dem zugehörigen Kugellagerinnenring 42 und den in den Kugeltaschen 8 aufgenommenen Kugeln 10.

FIG 6 zeigt das - vollständige bzw. vollständig montierte - Kugellager 40 mit dem Kugellagerinnenring 42, dem Kugellageraußenring 44 und dem - Kugellagerinnenringschulter-geführten 78 - Kugellager-Käfig 2 (nach der zweiten Ausführung) sowie den in den Kugeltaschen 8 aufgenommenen Kugeln 10.

### - "Kugellager-Käfig 2 mit konischer Außenfläche 30 und konkavem Kalottenboden 70"), FIGen 7 bis 9

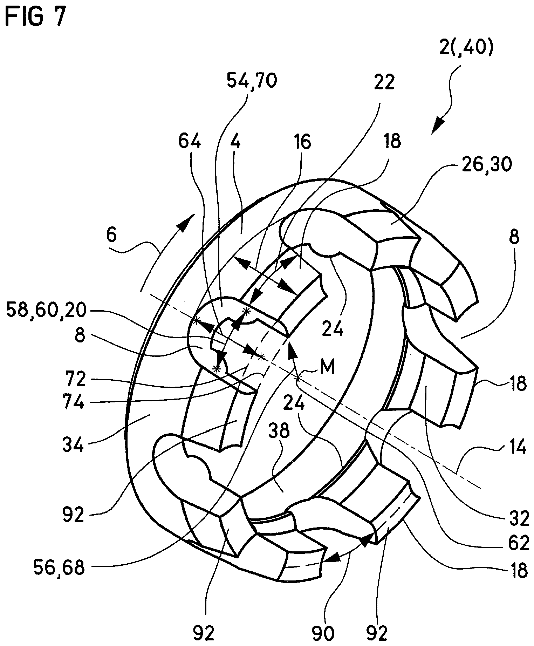

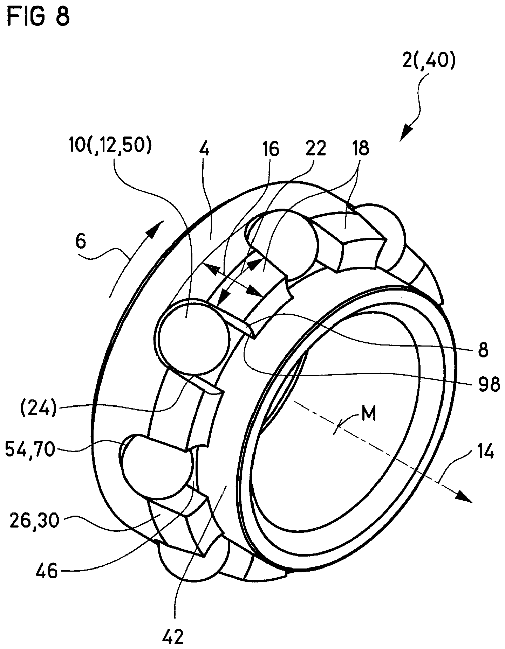

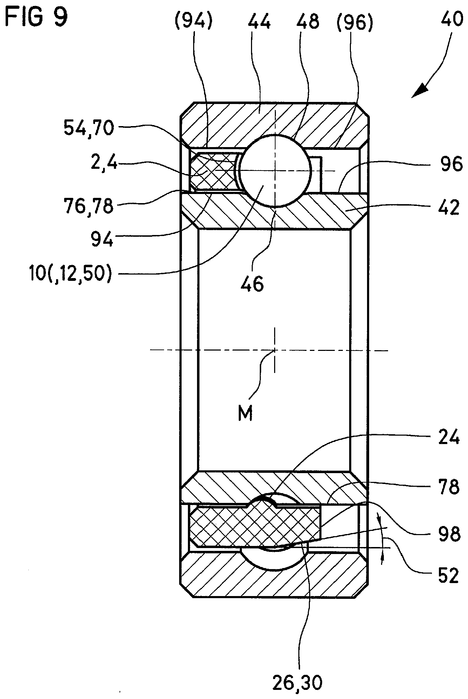

FIGen 7 bis 9 zeigen (ebenfalls in den verschiedenen Baugruppen, d.h. alleine nur der Kugellager-Käfig 2 (FIG 7), Kugellager-Käfig 2 mit Innenring 42 (FIG 8) und Kugellager-Käfig 2 eingebaut in ein einreihiges Radial-Rillenkugellager 40 (FIG 9)) eine dritte Ausführung des Kugellager-Käfigs 2 mit einer konischen Außenfläche 30 und einem konkaven Kalottenboden 70".

Wie die FIGen 7 bis 9 zeigen, weist der Kugellager-Käfig 2 nach dieser dritten Ausführung bzw. weisen dessen Stege 18 eine in der Axialrichtung 14 konische radiale Außenfläche 30, beispielsweise hier mit einem Konuswinkel 52 von in etwa 10°, auf.

Dadurch können sich die Kalotten-Nasen Drehzahl-bedingt durch die im Kugellager auftretenden Fliehkräfte nach außen aufbiegen und es kann verhindert werden, dass die dann nach außen gebogenen Kalotten-Nasen Kontakt zu einer Schulter oder einer Laufbahn des äußeren Laufrings aufnehmen.

Weiterhin sieht der Kugellager-Käfig 2 nach dieser dritten Ausführung, wie die FIGen 7 bis 9 zeigen, den Kalottenboden 54 vor, welcher die entsprechende einer Kugeloberfläche der in der Kugeltasche 8 aufzunehmenden bzw. aufgenommenen Kugel 10 gewölbte ("konkave") Fläche 70 aufweist.

FIG 8 zeigt den - Kugellagerinnenringschulter-geführten 78 - Kugellager-Käfig 2 nach dieser dritten Ausführung zusammen mit dem zugehörigen Kugellagerinnenring 42 und den in den Kugeltaschen 8 aufgenommenen Kugeln 10.

FIG 9 zeigt das - vollständige bzw. vollständig montierte - Kugellager 40 mit dem Kugellagerinnenring 42, dem Kugellageraußenring 44 und dem - Kugellagerinnenringschulter-geführten 78 - Kugellager-Käfig 2 (nach der dritten Ausführung) sowie den in den Kugeltaschen 8 aufgenommenen Kugeln 10.

### - "Kugellager-Käfig 2 mit konischer Außenfläche 30 und geradem Kalottenboden 66", FIGen 10 bis 12

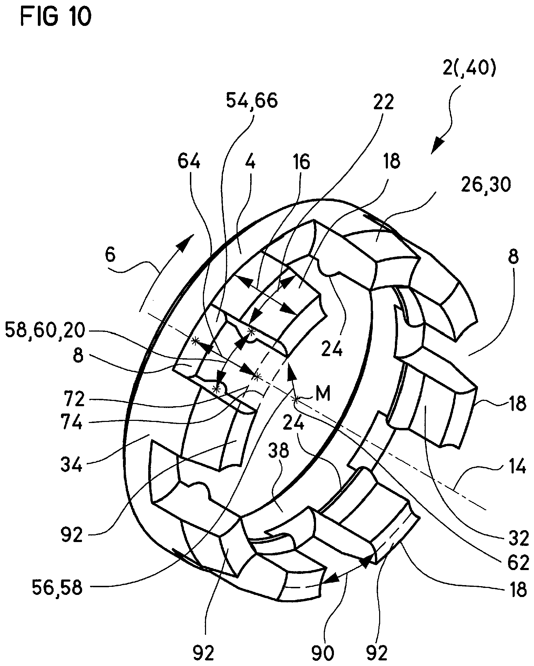

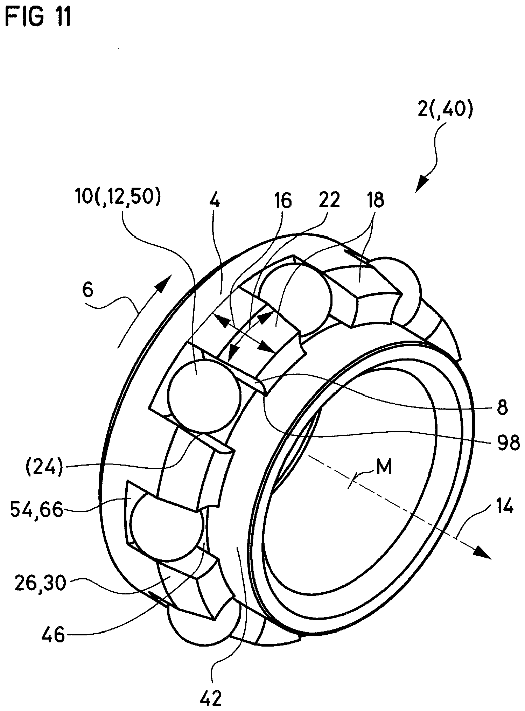

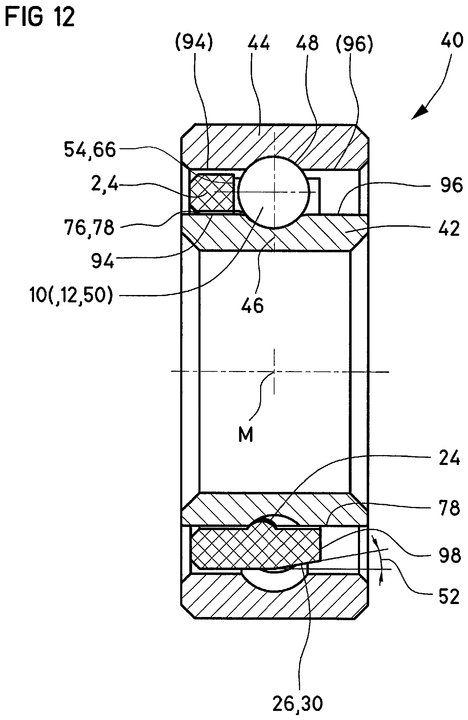

FIGen 10 bis 12 zeigen (ebenfalls in den verschiedenen Baugruppen, d.h. alleine nur der Kugellager-Käfig 2 (FIG 10), Kugellager-Käfig 2 mit Innenring 42 (FIG 11) und Kugellager-Käfig 2 eingebaut in ein einreihiges Radial-Rillenkugellager 40 (FIG 12)) eine vierte Ausführung des Kugellager-Käfigs 2 mit einer konischen Außenfläche 30 und einem geraden Kalottenboden 66.

Wie die FIGen 10 bis 12 zeigen, weist der Kugellager-Käfig 2 nach dieser vierten Ausführung bzw. weisen dessen Stege 18 auch die in der Axialrichtung 14 konische radiale Außenfläche 30, beispielsweise auch hier mit einem Konuswinkel 52 von in etwa 10°, auf.

Weiterhin sieht der Kugellager-Käfig 2 nach dieser vierten Ausführung, wie die FIGen 10 bis 12 zeigen, einen Kalottenboden 54 vor, welcher die ebene ("gerade") Fläche 66 aufweist.

FIG 11 zeigt den - Kugellagerinnenringschulter-geführten 78 - Kugellager-Käfig 2 nach dieser dritten Ausführung zusammen mit dem zugehörigen Kugellagerinnenring 42 und den in den Kugeltaschen 8 aufgenommenen Kugeln 10.

FIG 12 zeigt das - vollständige bzw. vollständig montierte - Kugellager 40 mit dem Kugellagerinnenring 42, dem Kugellageraußenring 44 und dem - Kugellagerinnenringschulter-geführten - 78 Kugellager-Käfig 2 (nach der dritten Ausführung) sowie den in den Kugeltaschen 8 aufgenommenen Kugeln 10.

### Herstellung des Kugellager-Käfigs 2 mittels Spritzgießens 36

Ein großer Vorteil aller dieser Kugellager-Käfige 2 besteht insbesondere in deren Herstellprozess.

Wird der Kugellager-Käfig 2 durch Spritzgießen 36 hergestellt, so kann - aufgrund des Käfig-Designs des Kugellager-Käfigs 2 - , wie FIG. 13 zeigt, das Spritzgießwerkzeug 80, in diesem Fall ein 2-teiliges Spritzgießwerkzeug 80 mit einem Oberteil 82 und einem über eine Trennfuge 88 mit dem Oberteil 82 verbundenen bzw. verbindbaren Unterteil 84, sehr einfach ausgeführt sein.

Das über die Trennfuge 88 zusammengefügte Ober- und Unterteil bilden dabei, wie FIG. 13 verdeutlicht, die Negativform 86 des Kugellager-Käfigs 2 aus.

Der Führungsabschnitt 24 liegt dabei, wie FIG 13 auch verdeutlicht, in der Trennfuge 88 des 2-teiligen Spritzgießwerkzeugs 80, so dass ein vollständiges, formschlüssiges Entformen des Spritzlings durch Öffnen des Werkzeug-Oberteils 82 erfolgen kann.

Obwohl die Erfindung im Detail durch das bzw. die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 2: Kugellager-Käfig
- 4: ringförmiger Körper/Käfigrücken
- 6: Umfangsrichtung des Kugellager-Käfigs 2 bzw. des Kugellagers 40
- 8: Kugeltasche
- 10: Kugel

- 12: Kugeldurchmesser
- 14: Axialrichtung, axial
- 16: axiale Länge eines Stegs 18
- 18: Steg
- 20: Abstand, Kreisbogenlänge (zwischen zwei benachbarten Stegen 18), (mittlerer) Stegabstand, (mittlere) Kugeltaschenbreite

- 22: Breite eines Steges 18, Erstreckung eines Steges 18 entlang eines Kreisbogens (Kreisbogenlänge) in Umfangsrichtung 6
- 24: Führungsabschnitt, Rippe
- 26: radiale Außenseite/-fläche eines Stegs 18
- 28: zylindrische radiale Außenfläche
- 30: konische radiale Außenfläche

- 32: radiale Innenseite/-fläche eines Stegs 18
- 34: Außenumfang des Kugellager-Käfigs 2 bzw. des Kugellagers 40
- 36: Spritzgießen
- 38: Innenumfang des Kugellager-Käfigs 2 bzw. des Kugellagers 40
- 40: Kugellager, (einreihiges) Radial-Rillenkugellager

- 42: Kugellagerinnenring, innerer Laufring
- 44: Kugellageraußenring, äußerer Laufring
- 46: Laufrille vom Kugellagerinnenring, innerer Laufring 42
- 48: Laufrille vom Kugellageraußenring, äußerer Laufring 44
- 50: Kugelsatz

- 52: Konuswinkel
- 54: Kalottenboden
- 56: Radialrichtung
- 58: axiale Mitte einer Kugeltasche 8, mittlere axiale Kugeltaschentiefe
- 60: mittlere radiale Höhe eines Steges 18

- 62: Mittelpunkt M des Kugellager-Käfigs 2 bzw. des Kugellagers 40
- 64: Tiefe einer Kugeltasche 8 (in Axialrichtung 14), axiale 14 Erstreckung einer Kugeltasche 8
- 66: ebene/gerade Fläche eines Kalottenbodens 54
- 68: Radius R
- 70: gewölbte/konkave Fläche eines Kalottenbodens 54

- 72: Abstand, Kreisbogenlänge (zwischen zwei benachbarten Stegen 18 des Kugellager-Käfigs 2 an dessen Außenumfang)
- 74: Abstand, Kreisbogenlänge (zwischen zwei benachbarten Stegen 18 des Kugellager-Käfigs 2 an dessen Innenumfang)
- 76: Außenumfang des inneren Laufrings 42
- 78: Innenringschulter des Kugellagerinnenrings/inneren Laufrings 42 (Kugellager-)Innenringschulter-geführt
- 80: (zweiteiliges) Spritzgießwerkzeug

- 82: erstes Werkzeugteil, Oberteil
- 84: zweites Werkzeugteil, Unterteil
- 86: Hohlraum, Negativform
- 88: Trennfuge
- 90: Kugeltaschenöffnung (an den Stegenden 92), "freier" Abstand an den Stegenden 92

- 92: (freies) Stegenende
- 94: erste, (axial) "nahe" Schulter
- 96: zweite, (axial) "ferne" Schulter
- 98: Überstand

## Patentansprüche

1. Kugellager (40) mit einem Kugellagerinnenring (42), einem Kugellageraußenring (44), einem Kugellager-Käfig (2), welcher einen radial umlaufenden, ringförmigen Körper (4) aufweist, an welchem in Umfangsrichtung (6) im Wesentlichen gleichmäßig verteilte, axial (14) mit einer vorgebbaren axialen Länge (16) auskragende Stege (18) angeordnet sind, welche eine Mehrzahl von einseitig axial (14) offenen Kugeltaschen (8) zur Aufnahme von einer entsprechenden Anzahl von Kugeln (10) mit einem vorgebbaren Kugeldurchmesser (12) ausbilden, wobei zumindest bei einem Steg (18) ein Führungsabschnitt (24) zum in einen Eingriff bringen mit einer Laufrille (46, 48) eines Kugellagerrings (42, 44) ausgebildet ist, wobei der Führungsabschnitt (24) mit einer Laufrille (46) des Kugellagerinnenrings (42) oder mit einer Laufrille (48) des Kugellageraußenrings (44) in einem Eingriff ist, und mit einer Vielzahl von den Kugeln (10) mit dem vorgebbaren Kugeldurchmesser (12), deren Anzahl der Anzahl der durch den Kugellager-Käfig (2) ausgebildeten Kugeltaschen (8) entsprechen, wobei jeweils eine von den Kugeln (10) in eine von den Kugeltaschen (8) aufgenommen ist, wobei die axiale Länge (16) der Stege (18) mindestens dem Kugeldurchmesser (12) entspricht und wobei der jeweilige Steg (18) einen Überstand (98) aufweist, mit dem der jeweilige Steg (18) axial über eine Kugel (10) hinausragt,
**dadurch gekennzeichnet, dass**
der axiale Überstand (98) derart bemessen ist, dass der jeweilige Steg (18) auf einer ersten, axial nahen Schulter (94) und einer zweiten, axial fernen Schulter (96) eines Kugellagerrings (42, 44) schultergeführt ist.

2. Kugellager (40) nach Anspruch 1,
**dadurch gekennzeichnet, dass**
der Führungsabschnitt (24) an einer radialen Außenseite (26) des Stegs (18) ausgebildet ist zum in einen Eingriff bringen mit einer Laufrille (48) eines Kugellageraußenrings (44) oder der Führungsabschnitt (24) an einer radialen Innenseite (32) des Stegs (18) ausgebildet ist zum in einen Eingriff bringen mit einer Laufrille (46) eines Kugellagerinnenrings (42).

3. Kugellager (40) nach mindestens einem der voranstehenden Ansprüche,
**dadurch gekennzeichnet, dass**
der Führungsabschnitt (24) einstückig mit dem Steg (18) ausgebildet ist, insbesondere an einer solchen axialen Position an dem Steg (18), dass der Kugellager-Käfig (2) mit einem Axialspiel in einem Kugellager (40) geführt werden kann.

4. Kugellager (40) nach mindestens einem der voranstehenden Ansprüche,
**dadurch gekennzeichnet, dass**
bei einer Mehrzahl von Stegen (18), insbesondere bei allen Stegen (18), jeweils der Führungsabschnitt (24), insbesondere positionsgleich bei im Wesentlichen identischen Stegen (18), ausgebildet ist oder dass bei jedem vierten oder jedem dritten oder jedem zweiten der Stege (18) jeweils der Führungsabschnitt (24), insbesondere positionsgleich bei im Wesentlichen identischen Stegen (18), ausgebildet ist.

5. Kugellager (40) nach mindestens einem der voranstehenden Ansprüche,
**dadurch gekennzeichnet, dass**
der Führungsabschnitt (24) als eine Erhebung, insbesondere eine sich in der Umfangsrichtung (6) erstreckende Erhebung, insbesondere eine sich in der Umfangsrichtung (6) erstreckende Rippe (24), ausgebildet ist, insbesondere, dass sich die in der Umfangsrichtung (6) erstreckende Rippe (24) im Wesentlichen über die gesamte Breite (22) des Steges (18) in Umfangsrichtung (6) an dessen radialen Außen- (26) bzw. Innenseite (32) erstreckt.

6. Kugellager (40) nach mindestens einem der voranstehenden Ansprüche,
**dadurch gekennzeichnet, dass**
die Stege (18) eine in der Axialrichtung (14) zylindrische radiale Außenfläche (28) oder eine in der Axialrichtung (14) konische radiale Außenfläche (30), insbesondere mit einem Konuswinkel (52) zwischen in etwa 2° und in etwa 20°, insbesondere zwischen in etwa 7° und in etwa 12°, aufweisen.

7. Kugellager (40) nach mindestens einem der voranstehenden Ansprüche,
**dadurch gekennzeichnet, dass**
der Kugellager-Käfig (2) zumindest teilweise aus Kunststoff, insbesondere aus Polyetheretherketon (PEEK), Polyetherketon (PEK), Polyphenylensulfid (PPS), Polyphenylsulfon (PPSU), Polyamidimid (PAI), Polyimid (PI) oder Phenolharz (PF), insbesondere Baumwollgewebe-verstärktes Phenolharz (PF), besteht.

8. Kugellager (40) nach mindestens einem der voranstehenden Ansprüche,
**dadurch gekennzeichnet, dass**
ein zwischen jeweils zwei in der Umfangsrichtung (6) benachbarten Stegen (18) an dem radial umlaufenden, ringförmigen Körper (4) ausgebildeter Kalottenboden (54) eine ebene (66) oder gewölbte Fläche (70) aufweist.

9. Kugellager (40) nach mindestens einem der voranstehenden Ansprüche,
**dadurch gekennzeichnet, dass**
ein Abstand (72) der jeweils zwei in der Umfangsrichtung (6) benachbarten Stege (18) in der Umfangrichtung (6) an einem radialen Außenumfang (34) des Kugellager-Käfigs (2) größer ist als der Abstand (74) an einem radialen Innenumfang (38) des Kugellager-Käfigs (2).

10. Kugellager (40) nach mindestens einem der voranstehenden Ansprüche,
**hergestellt durch**
spanende Formgebung, durch additive Fertigung, insbesondere durch 3-D-Druck, oder durch Spritzgießen (36).

11. Kugellager (40) nach mindestens einem der voranstehenden Ansprüche 1 bis 10,
**dadurch gekennzeichnet, dass**
das Kugellager (40) als ein einreihiges Radial-Rillenkugellager (40) ausgebildet ist.

12. Kugellager (40) nach einem der Ansprüche 1 bis 11,
**dadurch gekennzeichnet, dass**
der Kugellager-Käfig (2) Innenringschulter (78) geführt ist, wobei der Führungsabschnitt (24) an einer radialen Innenseite (32) des Stegs (18) ausgebildet und in einem Eingriff mit einer Laufrille (46) des Kugellagerinnenrings (42) ist.

13. Kugellager (40) nach einem der Ansprüche 1 bis 12,
**dadurch gekennzeichnet, dass**
die Kugeln (10) den vorgebbaren Kugeldurchmesser (12) von kleiner als 5 mm aufweisen.

14. Dentalgerät, insbesondere Dentalturbine, in welches ein Kugellager (40) nach einem der Ansprüche 1 bis 13 eingesetzt ist.

15. Verfahren zur Herstellung eines Kugellagers (40) nach einem der Ansprüche 1 bis 13, bei welchem ein Spritzgießwerkzeug (80) mit zwei über eine Trennfuge (88) zusammenfügbare bzw. trennbare Werkzeugteile (82, 84), wobei die beiden Werkzeugteile (82, 84) im zusammengefügten Zustand einen einen Kugellager-Käfig (2) des Kugellagers (40) abbildenden Hohlraum (86) für den Kugellager-Käfig (2) ausbilden, wobei der Führungsabschnitt (24) des Kugellager-Käfigs (2) in der Trennfuge (88) liegt, dazu verwendet wird, den schultergeführten Kugellager-Käfig (2) des genannten Kugellagers (40) herzustellen.

## Claims

1. Ball bearing (40) having a ball-bearing inner ring (42), having a ball-bearing outer ring (44), having a ball-bearing cage (2), which has a radially encircling annular body (4) on which there are arranged webs (18) distributed substantially uniformly in a circumferential direction (6) and projecting axially with a predefinable axial length (16) and forming a plurality of ball pockets (8), said ball pockets being open in an axial direction (14) on one side and serving for receiving a corresponding number of balls (10) with a predefinable ball diameter (12), wherein, at least at one web (18), a guide portion (24) is configured for being brought into engagement with a running groove (46, 48) of a ball-bearing ring (42, 44), wherein the guide portion (24) is in engagement with a running groove (46) of the ball-bearing inner ring (42) or with a running groove (48) of the ball-bearing outer ring (44), and having a multiplicity of the balls (10) with the predefinable ball diameter (12), the number of which corresponds to the number of ball pockets (8) formed by the ball-bearing cage (2), wherein in each case one of the balls (10) is received in one of the ball pockets (8), wherein the axial length (16) of the webs (18) corresponds at least to the ball diameter (12), and wherein the respective web (18) has a protrusion (98) with which the respective web (18) projects axially beyond a ball (10),
**characterized in that**
the axial protrusion (98) is dimensioned in such a way that the respective web (18) is shoulder-guided on a first, axially close shoulder (94) and a second, axially remote shoulder (96) of a ball-bearing ring (42, 44).

2. Ball bearing (40) according to Claim 1,
**characterized in that**
the guide portion (24) is formed on a radial outer side (26) of the web (18) for being brought into engagement with a running groove (48) of a ball-bearing outer ring (44), or the guide portion (24) is formed on a radial inner side (32) of the web (18) for being brought into engagement with a running groove (46) of a ball-bearing inner ring (42) .

3. Ball bearing (40) according to at least one of the preceding claims,
**characterized in that**
the guide portion (24) is formed in one piece with the web (18), in particular at such an axial position at the web (18) that the ball-bearing cage (2) can be guided with axial play in a ball bearing (40) .

4. Ball bearing (40) according to at least one of the preceding claims,
**characterized in that**,
for a plurality of webs (18), in particular for all the webs (18), in each case the guide portion (24) is formed in an in particular positionally identical manner with substantially identical webs (18), or in that, for each fourth or each third or each second one of the webs (18), in each case the guide portion (24) is formed in an in particular positionally identical manner with substantially identical webs (18) .

5. Ball bearing (40) according to at least one of the preceding claims,
**characterized in that**
the guide portion (24) is in the form of an elevation, in particular an elevation extending in the circumferential direction (6), in particular a rib (24) extending in the circumferential direction (6), in particular **in that** the rib (24) extending in the circumferential direction (6) extends substantially over the entire width (22) of the web (18) in the circumferential direction (6) at the radial outer side (26) or inner side (32) of said web.

6. Ball bearing (40) according to at least one of the preceding claims,
**characterized in that**
the webs (18) have a radial outer surface (28) which is cylindrical in the axial direction (14) or a radial outer surface (30) which is conical in the axial direction (14), in particular with a cone angle (52) between approximately 2° and approximately 20°, in particular between approximately 7° and approximately 12°.

7. Ball bearing (40) according to at least one of the preceding claims,
**characterized in that**
the ball-bearing cage (2) consists at least partially of plastic, in particular of polyether ether ketone (PEEK), polyether ketone (PEK), polyphenylene sulphide (PPS), polyphenyl sulphone (PPSU), polyamide-imide (PAI), polyimide (PI) or phenolic resin (PF), in particular cotton-fabric-reinforced phenolic resin (PF).

8. Ball bearing (40) according to at least one of the preceding claims,
**characterized in that**
a cap base (54) formed on the radially encircling annular body (4) between in each case two webs (18) which are adjacent in the circumferential direction (6) has a planar surface (66) or curved surface (70) .

9. Ball bearing (40) according to at least one of the preceding claims,
**characterized in that**
a spacing (72) in the circumferential direction (6) between the in each case two webs (18) adjacent in the circumferential direction (6) at a radial outer circumference (34) of the ball-bearing cage (2) is greater than the spacing (74) at a radial inner circumference (38) of the ball-bearing cage (2).

10. Ball bearing (40) according to at least one of the preceding claims,
produced by
cutting shaping, by way of additive manufacturing, in particular by way of 3D printing, or by way of injection moulding (36).

11. Ball bearing (40) according to at least one of preceding Claims 1 to 10,
**characterized in that**
the ball bearing (40) is in the form of a single-row grooved radial ball bearing (40).

12. Ball bearing (40) according to one of Claims 1 to 11,
**characterized in that**
the ball-bearing cage (2) is guided by an inner-ring shoulder (78), wherein the guide portion (24) is formed on a radial inner side (32) of the web (18) and is in engagement with a running groove (46) of the ball-bearing inner ring (42).

13. Ball bearing (40) according to one of Claims 1 to 12,
**characterized in that**
the balls (10) have the predefinable ball diameter (12) of less than 5 mm.

14. Dental device, in particular dental turbine, into which a ball bearing (40) according to one of Claims 1 to 13 is inserted.

15. Method for producing a ball bearing (40) according to one of Claims 1 to 13, in which an injection-moulding tool (80) having two tool parts (82, 84) which are able to be joined together or separated via a parting joint (88), wherein, in the joined-together state, the two tool parts (82, 84) form a cavity (86), replicating a ball-bearing cage (2) of the ball bearing (40), for the ball-bearing cage (2), wherein the guide portion (24) of the ball-bearing cage (2) is situated in the parting joint (88), is used to produce the shoulder-guided ball-bearing cage (2) of said ball bearing (40).

## Revendications

1. Roulement à billes (40) avec une bague intérieure de roulement à billes (42), une bague extérieure de roulement à billes (44), une cage de roulement à billes (2), qui présente un corps annulaire (4) s'étendant radialement, sur lequel sont agencées des entretoises (18) réparties de manière essentiellement uniforme dans la direction périphérique (6), faisant saillie axialement (14) avec une longueur axiale (16) prédéterminable, qui forment une pluralité de poches à billes (8) ouvertes axialement d'un côté (14) pour recevoir un nombre correspondant de billes (10) ayant un diamètre de bille (12) prédéterminable, une section de guidage (24) étant formée sur au moins une entretoise (18) pour la mise en prise avec une rainure de roulement (46, 48) d'une bague de roulement à billes (42, 44), la section de guidage (24) étant en prise avec une rainure de roulement (46) de la bague intérieure de roulement à billes (42) ou avec une rainure de roulement (48) de la bague extérieure de roulement à billes (44), et avec une pluralité de billes (10) ayant le diamètre de bille (12) prédéterminable, dont le nombre correspond au nombre de poches à billes (8) formées par la cage de roulement à billes (2), l'une des billes (10) étant respectivement reçue dans l'une des poches à billes (8), la longueur axiale (16) des entretoises (18) correspondant au moins au diamètre de bille (12) et l'entretoise respective (18) présentant une saillie (98), par laquelle l'entretoise respective (18) dépasse axialement d'une bille (10),
**caractérisé en ce que**
la saillie axiale (98) est dimensionnée de telle sorte que l'entretoise respective (18) est guidée par épaulement sur un premier épaulement axialement proche (94) et un deuxième épaulement axialement éloigné (96) d'une bague de roulement à billes (42, 44).

2. Roulement à billes (40) selon la revendication 1,
**caractérisé en ce que**
la section de guidage (24) est formée sur un côté extérieur radial (26) de l'entretoise (18) pour la mise en prise avec une rainure de roulement (48) d'une bague extérieure de roulement à billes (44) ou la section de guidage (24) est formée sur un côté intérieur radial (32) de l'entretoise (18) pour la mise en prise avec une rainure de roulement (46) d'une bague intérieure de roulement à billes (42).

3. Roulement à billes (40) selon au moins l'une quelconque des revendications précédentes,
**caractérisé en ce que**
la section de guidage (24) est formée d'un seul tenant avec l'entretoise (18), notamment à une position axiale sur l'entretoise (18) telle que la cage de roulement à billes (2) peut être guidée avec un jeu axial dans un roulement à billes (40).

4. Roulement à billes (40) selon au moins l'une quelconque des revendications précédentes,
**caractérisé en ce que**
la section de guidage (24) est formée pour une pluralité d'entretoises (18), notamment pour toutes les entretoises (18), notamment à la même position dans le cas d'entretoises (18) essentiellement identiques, ou **en ce que** la section de guidage (24) est formée pour chaque quatrième ou chaque troisième ou chaque deuxième entretoise (18), notamment à la même position dans le cas d'entretoises (18) essentiellement identiques.

5. Roulement à billes (40) selon au moins l'une quelconque des revendications précédentes,
**caractérisé en ce que**
la section de guidage (24) se présente sous la forme d'un bossage, notamment d'un bossage s'étendant dans la direction périphérique (6), notamment d'une nervure (24) s'étendant dans la direction périphérique (6), notamment en ce que la nervure (24) s'étendant dans la direction périphérique (6) s'étend essentiellement sur toute la largeur (22) de l'entretoise (18) dans la direction périphérique (6), sur son côté radial extérieur (26) ou intérieur (32).

6. Roulement à billes (40) selon au moins l'une quelconque des revendications précédentes,
**caractérisé en ce que**
les entretoises (18) présentent une surface extérieure radiale cylindrique (28) dans la direction axiale (14) ou une surface extérieure radiale conique (30) dans la direction axiale (14), notamment avec un angle de cône (52) compris entre environ 2° et environ 20°, notamment entre environ 7° et environ 12°.

7. Roulement à billes (40) selon au moins l'une quelconque des revendications précédentes,
**caractérisé en ce que**
la cage de roulement à billes (2) est au moins partiellement constituée de matière plastique, notamment de polyétheréthercétone (PEEK), de polyéthercétone (PEK), de sulfure de polyphénylène (PPS), de polyphénylsulfone (PPSU), de polyamide-imide (PAI), de polyimide (PI) ou de résine phénolique (PF), notamment de résine phénolique (PF) renforcée par du tissu de coton.

8. Roulement à billes (40) selon au moins l'une quelconque des revendications précédentes,
**caractérisé en ce que**
un fond de calotte (54) formé entre deux entretoises respectives (18) voisines dans la direction périphérique (6) sur le corps annulaire s'étendant radialement (4) présente une surface plane (66) ou bombée (70).

9. Roulement à billes (40) selon au moins l'une quelconque des revendications précédentes,
**caractérisé en ce que**
une distance (72) entre deux entretoises respectives (18) voisines dans la direction périphérique (6) est plus grande dans la direction périphérique (6) sur une périphérie extérieure radiale (34) de la cage de roulement à billes (2) que la distance (74) sur une périphérie intérieure radiale (38) de la cage de roulement à billes (2).

10. Roulement à billes (40) selon au moins l'une quelconque des revendications précédentes,
fabriqué par
façonnage par enlèvement de copeaux, par fabrication additive, notamment par impression 3D, ou par moulage par injection (36) .

11. Roulement à billes (40) selon au moins l'une quelconque des revendications 1 à 10 précédentes,
**caractérisé en ce que**
le roulement à billes (40) est configuré sous la forme d'un roulement à billes à rainure radiale à une seule rangée (40).

12. Roulement à billes (40) selon l'une quelconque des revendications 1 à 11,
**caractérisé en ce que**
la cage de roulement à billes (2) est guidée par un épaulement de bague intérieure (78), la section de guidage (24) étant formée sur un côté intérieur radial (32) de l'entretoise (18) et étant en prise avec une rainure de roulement (46) de la bague intérieure de roulement à billes (42).

13. Roulement à billes (40) selon l'une quelconque des revendications 1 à 12,
**caractérisé en ce que**
les billes (10) présentent le diamètre de bille (12) prédéterminable de moins de 5 mm.

14. Appareil dentaire, notamment turbine dentaire, dans lequel est inséré un roulement à billes (40) selon l'une quelconque des revendications 1 à 13.

15. Procédé de fabrication d'un roulement à billes (40) selon l'une quelconque des revendications 1 à 13, dans lequel un outil de moulage par injection (80) avec deux parties d'outil (82, 84) pouvant être assemblées ou séparées par l'intermédiaire d'un joint de séparation (88), les deux parties d'outil (82, 84) formant, à l'état assemblé, une cavité (86) représentant une cage de roulement à billes (2) du roulement à billes (40) pour la cage de roulement à billes (2), la section de guidage (24) de la cage de roulement à billes (2) se situant dans le joint de séparation (88), est utilisé pour fabriquer la cage de roulement à billes (2) guidée par épaulement dudit roulement à billes (40).
